# EUROPÄISCHE PATENTSCHRIFT

(11) **EP 1 313 784 B1**
(45) Veröffentlichungstag und Bekanntmachung des Hinweises auf die Patenterteilung: **01.03.2006**
(21) Anmeldenummer: 01967241.9
(22) Anmeldetag: 07.08.2001
(51) Int. Cl.: C08G 18/48, C09D 175/08

(54) **POLYURETHAN-(POLYMER-HYBRID-) DISPERSION MIT VERRINGERTER HYDROPHILIE, VERFAHREN ZU IHRER HERSTELLUNG SOWIE DEREN VERWENDUNG**
POLYURETHANE (POLYMER HYBRID) DISPERSION WITH REDUCED HYDROPHILICITY, METHOD FOR PRODUCING THE SAME AND THE USE THEREOF
DISPERSION (HYBRIDE POLYMERE) DE POLYURETHANNE A HYDROPHILIE REDUITE, SON PROCEDE DE PRODUCTION ET SON UTILISATION

(30) Priorität: 09.08.2000 DE 10038941
(43) Veröffentlichungstag der Anmeldung: 28.05.2003
(73) Patentinhaber: Construction Research & Technology GmbH, 83308 Trostberg (DE)
(72) Erfinder: REICHEL, Frank, (DE); MAIER, Alois, 84549 Engelsberg (DE); STEIDL, Norbert, 83361 Kienberg (DE); KERN, Alfred, 84558 Kirchweidach (DE); WOLFERTSTETTER, Franz, 83349 Palling (DE); REUSMANN, Gerhard, 45131 Essen (DE)
(74) Vertreter: Weiss, Wolfgang
(86) Internationale Anmeldenummer: PCT/EP2001/009135
(87) Internationale Veröffentlichungsnummer: WO 2002/012364

(56) Entgegenhaltungen:
- WO-A-00/50484
- WO-A-98/27132
- WO-A-99/50325
- DE-A- 19 949 971
- US-A- 5 677 413
- DATABASE WPI Section Ch, Week 200152 Derwent Publications Ltd., London, GB; Class A25, AN 2000-130640 XP002902317 & JP 03 204244 B (ARAKAWA CHEM IND LTD), 4. September 2001 (2001-09-04)

## Beschreibung

Die vorliegende Erfindung betrifft Polyurethan- oder Polyurethan-Polymer-Hybrid-Dispersionen mit verringerter Hydrophilie, Verfahren zu ihrer Herstellung sowie deren Verwendung.

Die Bindemittel-Klasse der wässrigen bzw. wasserbasierenden Polyurethane ist seit über 40 Jahren bekannt. Das Eigenschaftsprofil der wasserbasierenden Polyurethane wurde in den vergangenen Jahrzehnten kontinuierlich verbessert, was durch eine Vielzahl von Patentschriften und Veröffentlichungen zu diesem Themenkreis eindrucksvoll belegt wird. Zur Chemie und Technologie der wasserbasierenden Polyurethane sei auf D. Dieterich, K. Uhlig in *Ullmann's Encyclopedia of Industrial Chemistry, Sixth Edition 1999 Electronic Release.* Wiley-VCH; D. Dieterich in *Houben-Weyl, Methoden der Organischen Chemie.* Bd. E20, H. Bartl, J. Falbe (Hrsg.), Georg Thieme Verlag, Stuttgart 1987, S. 1641 ff.; D. Dieterich, Prog. Org. Coat. **9** (1981) 281-330; J. W. Rosthauser, K. Nachtkamp, Journal Of Coated Fabrics **16** (1986) 39-79; R. Arnoldus, Surf. Coat. **3** (Waterborne Coat.) (1990), 179-98 verwiesen.

Die Tatsache, dass wässrige Polyurethane gerade in den letzten Jahren zunehmende kommerzielle Bedeutung erlangt haben, ist auf drei Ursachen zurückzuführen:
1. Die zunehmende Verschärfung der Umweltgesetzgebung erfordert die Entwicklung ökologisch und physiologisch verträglicher Produkte, bei denen die Emissionen an Lösemitteln und anderen flüchtigen organischen Verbindungen (VOC, volatile organic compounds) auf ein Minimum reduziert sind.
2. Die Verwendung von teuren organischen Lösemitteln in konventionellen und wässrigen Polyurethanen ist aus ökonomischen Gründen unerwünscht.
3. Die Performance von wasserbasierenden Polyurethanen erreicht oder übertrifft bereits die der konventionellen isocyanat- und/oder lösemittelhaltigen Polyurethane.

Auch innerhalb von bauchemischen Anwendungen gewinnen wasserbasierende Polyurethane als Bindemittel immer mehr an Bedeutung. In der Bauchemie werden insbesondere lösemittelarme (low VOC) oder lösemittelfreie (zero VOC) Polyurethan-Dispersionen und Polyurethan-Polymer-Hybrid-Dispersionen mit einem hohen Festkörper-Gehalt gewünscht; die mit Hilfe von rationellen und universellen Herstellungsverfahren zugänglich gemacht werden können.

Gerade in bauchemischen Anwendungen werden aber Bindemittel mit hoher Elastizität benötigt, die im formulierten Zustand nicht zur Versprödung neigen, eine hohe Frühwasserbeständigkeit aufweisen und einer permanenten Wasserbelastung ohne nennenswerte Anquellung widerstehen können. Optimale Material-Eigenschaften (Kombination aus hoher Zugfestigkeit und hoher Dehnung bei der Zugfestigkeit) können nur mit wasserbasierenden Polyurethanen auf Basis von Polypropylenglykolen erreicht werden. Polypropylenglykole bieten daneben die notwendige Verseifungsstabilität. Konventionelle Polyurethan-(Polymer-Hybrid-) Dispersionen auf Basis von Polypropylenglykolen weisen jedoch eine in der Praxis nicht zu vernachlässigende Hydrophilie auf.

Polyurethan-Dispersionen und Polyurethan-Polymer-Hybrid-Dispersionen auf Basis von Polypropylenglykolen sind aus den Patentdokumenten WO 99/50 325, US 5 576 382, EP-A 712 877, DE 199 49 971, WO 99/16805, US 5 859 111 bereits hinreichend bekannt.

Wasserbasierende Polyurethane, bei denen eine polymerinterne Hydrophobierung des Polyurethanrückgrats zu verbesserten oder vergleichbaren, Material-Eigenschaften im Vergleich mit dem Basis-System führte, waren bisher jedoch nicht bekannt.

Der vorliegenden Erfindung lag daher die Aufgabe zugrunde, eine Polyurethan-(Polymer-Hybrid-)Dispersion mit verringerter Hydrophilie zu entwickeln, welche die genannten Nachteile des Standes der Technik nicht aufweist, sondern gute anwendungstechnische Eigenschaften besitzt und gleichzeitig unter Berücksichtigung ökologischer, ökonomischer und physiologischer Aspekte hergestellt werden kann.

Diese Aufgabe wurde erfindungsgemäß durch die Bereitstellung einer Polyurethan- oder Polyurethan-Polymer-Hybrid-Dispersion gelöst, welche dadurch erhältlich ist, dass man
a) 50 bis 100 Gew.-Teile eines hydrophob modifizierten Blockcopolymers (A)(i) mit zwei oder mehreren Hydroxyl-Gruppen und einer Molekularmasse von 500 bis 6 000 Dalton, umfassend 10 bis 90 Gew.-% eines Polymers mit hydrophobierenden Eigenschaften und 90 bis 10 Gew.-% eines Polypropylenoxid-Polymers, und/oder
   50 bis 100 Gew.-Teile eines hydrophoben Blockcopolymers (A)(ii) mit zwei oder mehreren Hydroxyl-Gruppen und einer Molekularmasse von 500 bis 6 000 Dalton, umfassend zwei oder mehrere hydrophobe Alkylenoxide, und/oder
   50 bis 100 Gew.-Teile eines hydrophob modifizierten statistischen Copolymers (A)(iii) mit zwei oder mehreren Hydroxyl-Gruppen und einer Molekularmasse von 500 bis 6 000 Dalton, umfassend 10 bis 90 Gew.-% eines hydrophoben Alkylenoxides in Kombination mit geeigneten Starter-Molekülen und 90 bis 10 Gew.-% Propylenoxid, wobei die Komponenten (A)(i), (A)(ii) und (A)(iii) kein polymeres Ethylen oxid enthalten,
b) 14 bis 140 Gew.-Teile einer Polyol-Komponente (B), enthaltend
   b₁) 2 bis 20 Gew.-Teile einer niedermolekularen und anionogenen Polyol-Komponente (B)(i) mit zwei oder mehreren Hydroxyl-Gruppen und einer oder mehreren gegenüber Polyisocyanaten inerten Carbonsäure- und/oder Sulfonsäure-Gruppe(n) und einer Molekularmasse von 100 bis 1000 Dalton,
   b₂) gegebenenfalls 2 bis 20 Gew.-Teile einer niedermolekularen Polyol-Komponente (B)(ii) mit zwei oder mehreren Hydroxyl-Gruppen und einer Molekularmasse von 50 bis 499 Dalton,
   b₃) gegebenenfalls 10 bis 100 Gew.-Teile eines weiteren polymeren Polyols (B)(iii) mit zwei oder mehreren Hydroxyl-Gruppen und einer Molekularmasse von 500 bis 6 000 Dalton,
c) 25 bis 250 Gew.-Teile einer Polyisocyanat-Komponente (C), umfassend mindestens ein Polyisocyanat, Polyisocyanat-Derivat oder Polyisocyanat-Homologes mit zwei oder mehreren aliphatischen oder aromatischen Isocyanat-Gruppen,
d) 2 bis 20 Gew.-Teile einer Neuträlisations-Komponente (D),
e) 3 bis 30 Gew.-Teile einer Kettenverlängerungs-Komponente (E) sowie
f) 100 bis 5 000 Gew.-Teile Wasser
zu einer lösemittelfreien oder lösemittelarmen Polyurethan-Dispersion umsetzt und gegebenenfalls anschließend mit
g) 117,5 bis 3 200 Gew.-Teilen einer Monomer-Komponente (F), umfassend mindestens ein Monomer mit einer oder mehreren radikalisch polymerisierbaren Doppelbindungen und
h) 0,5 bis 50 Gew.-Teilen einer Initiator-Komponente (G) umfassend mindestens einen lipophilen Radikal-Initiator mit einer oder mehreren thermisch labilen Azo- oder Peroxo-Gruppen
zu einer lösemittelfreien oder lösemittelarmen Polyurethan-Polymer-Hybrid-Dispersion weiterreagieren lässt.

Es hat sich nämlich überraschenderweise gezeigt, dass durch die Verwendung von hydrophob modifizierten Blockcopolymeren, und/oder hydrophoben Blockcopolymeren und/oder hydrophob modifizierten statistischen Copolymeren als Polyolen nicht nur Polyurethan-(Polymer-Hybrid-)Dispersionen mit verringerter Hydrophilie bzw. Wasseraufnahme zugänglich sind, sondern dass diese darüber hinaus auch noch lösemittelfrei oder lösemittelarm und mit hohen Festkörper-Gehalten hergestellt werden können. Zudem war nicht hervorsehbar, dass die erfindungsgemässen Polyurethan-(Polymer-Hybrid-) Dispersionen im Vergleich mit Polyurethan-(Polymer-Hybrid-)Dispersionen auf Basis von reinen Polypropylenglykolen nur einen sehr geringen Bedarf an stabilisierenden Gruppen haben und exzellente mechanische Eigenschaften aufweisen. Bedingt durch eine stärkere Orientierung bzw. Phasenseparation von Hartsegmenten und Weichsegmenten (hydrophob modifizierte Blockcopolymere und/oder hydrophobe Blockcopolymere und/oder hydrophob modifizierte statistische Copolymere) im erfindungsgemäßen Polyurethan-Polymer werden die zur Stabilisierung benötigten Carboxylat- und/oder Sulfonat-Gruppen in geringerem Mass sterisch abgeschirmt und können daher die Micellen der Polyurethan-(Polymer-Hybrid-)Dispersion besser stabilisieren. Bei Polyurethan-(Polymer-Hybrid-)Dispersionen mit Weichsegmenten auf Basis von reinen Polypropylenglykolen ist dieser Effekt nicht gegeben, ein Teil der zur Stabilisierung benötigten Carboxylat und/oder Sulfonat-Gruppen liegt daher "inaktiviert" vor.

Die erfindungsgemäße Polyurethan-(Polymer-Hybrid-)Dispersion mit verringerter Hydrophilie ist definiert durch ihr mehrstufiges Herstellverfahren. In der Reaktionstufe a) wird zunächst eine lösemittelfreie oder lösemittelarme Polyurethan-Dispersion hergestellt, die in der Reaktionstufe b) dann ggf. weiter zu einer lösemittelfreien oder lösemittelarmen Polyurethan-Polymer-Hybrid-Dispersion umgesetzt wird.

Zur Durchführung dieses Verfahrens werden vorzugsweise unter Anwendung der in der Polyurethan-Chemie üblichen Techniken in der Reaktionsstufe' a₁) 50 bis 100 Gew.-Teile eines hydrophob modifizierten Blockcopolymers (A)(i) und/oder 50 bis 100 Gew.-Teile eines hydrophoben Blockcopolymers (A)(ii) und/oder 50 bis 100 Gew.-Teile eines hydrophob modifizierten statistischen Copolymers (A)(iii), gegebenenfalls 2 bis 20 Gew.-Teile einer niedermolekularen Polyol-Komponente (B)(ii) und gegebenenfalls 10 bis 100 Gew.-Teile eines weiteren polymeren Polyols (B)(iii) mit 25 bis 250 Gew.-Teilen einer Polyisocyanat-Komponente (C) ggf. in Gegenwart eines Katalysators zu einem Polyurethan-Preaddukt umgesetzt. Die Herstellung des Polyurethan-Preaddukts gemäss Reaktionsstufe a₁) erfolgt vorzugsweise in der Weise, dass die Komponente (C) innerhalb eines Zeitraumes von einigen Minuten bis zu einigen Stunden dem Gemisch aus den (A)(i) und/oder (A)(ii) und/oder (A)(iii), gegebenenfalls (B) (ii) und gegebenenfalls (B)(iii) zugesetzt bzw. zudosiert wird oder alternativ dazu das Gemisch aus den Komponenten (A)(i) und/oder (A)(ii) und/oder (A)(iii), gegebenenfalls (B) (ii) und gegebenenfalls (B)(iii) innerhalb eines Zeitraumes von einigen Minuten bis zu einigen Stunden der Komponente (C) zugesetzt bzw. zudosiert wird.

In der nachfolgenden Reaktionssstufe a₂) wird das ganz oder teilweise abreagierte Polyurethan-Preaddukt aus Stufe a₁) mit 2 bis 20 Gew.-Teilen einer niedermolekularen und anionogenen Polyol-Komponente (B)(i) zum entsprechenden Polyurethan-Prepolymer umgesetzt. Die Herstellung des Polyurethan-Prepolymers gemäss Reaktionsstufe a₂) erfolgt vorzugsweise in der Weise, dass die feingemahlene Polyol-Komponente (B)(i) mit einer mittleren Teilchengröße < 150 µm innerhalb eines Zeitraumes von einigen Minuten bis zu einigen Stunden dem Polyurethan-Preaddukt aus Stufe a₁) zugesetzt bzw. zudosiert wird. Das in Reaktionstufe a₂) eingesetzte Polyurethan-Preaddukt aus Stufe a₁) kann bei entsprechender Prozessführung bzw. unvollständiger Umsetzung neben Isocyanat-Gruppen und/oder Polyisocyanat-Monomeren gegebenenfalls auch noch freie Hydroxyl-Gruppen aufweisen. Zur Verringerung der Viskosität können in der Reaktionsstufe a₁) und/oder in der Reaktionstufe a₂) geringe Mengen an organischen Lösemitteln eingesetzt werden.

Alternativ dazu kann in der Reaktionstufe a₁) auch ein Premix aus 50 bis 100 Gew.-Teilen eines hydrophob modifizierten Blockcopolymers (A)(i) und/oder 50 bis 100 Gew.-Teilen eines hydrophoben Blockcopolymers (A) (ii) und/oder 50 bis 100 Gew.-Teilen eines hydrophob modifizierten statistischen Copolymers (A)(iii), 2 bis 20 Gew.-Teilen einer niedermolekularen und anionogenen Polyol-Komponente (B)(i), gegebenenfalls 2 bis 20 Gew.-Teilen einer niedermolekularen Polyol-Komponente (B)(ii) und ggf. 10 bis 100 Gew.-Teilen eines weiteren polymeren Polyols (B)(iii) hergestellt und in der Reaktionsstufe a₂) mit 25 bis 250 Gew-Teilen einer Polyisocyanat-Komponente (C) gegebenenfalls stufenweise und gegebenenfalls in Gegenwart eines Katalysators zu einem Polyurethan-Prepolymer umgesetzt werden. Die Herstellung des Polyurethan-Prepolymers gemäss Reaktionsstufe a₂) erfolgt vorzugsweise in der Weise, dass die Komponente (C) innerhalb eines Zeitraumes von einigen Minuten bis zu einigen Stunden dem Gemisch aus den Komponenten (A)(i) und/oder (A)(ii), (B)(i), gegebenenfalls (B) (ii) und gegebenenfalls (B)(iii) zugesetzt bzw. zudosiert wird oder alternativ dazu das Gemisch aus Komponenten (A)(i) und/oder (A)(ii) und/oder (A)(iii), (B)(i), gegebenenfalls (B) (ii) und gegebenenfalls (B)(iii) gegebenenfalls stufenweise innerhalb eines Zeitraumes von einigen Minuten bis zu einigen Stunden der Komponente (C) zugesetzt bzw. zudosiert wird. Zur Verringerung der Viskosität können in der Reaktionsstufe a₁) und/oder in der Reaktionstufe a₂) gegebenenfalls geringe Mengen an organischen Lösemitteln eingesetzt werden.

Die Durchführung der Reaktionsstufen a₁) und a₂) ist im Hinblick auf die Reaktionsbedingungen relativ unkritisch. Der Reaktionsansatz wird in den Reaktionsstufen a₁) und a₂) unter Ausnutzung der Exothermie der Polyadditions-Reaktion bis zum Erreichen des berechneten bzw. theoretischen NCO-Gehaltes vorzugsweise bei 60 bis 120 °C, besonders bevorzugt bei 80 bis 100 °C, unter Inertgas-Atmosphäre gerührt. Die erforderlichen Reaktions-Zeiten liegen im Bereich von einigen Stunden und werden durch Reaktions-Parameter wie die Reaktivität der Komponenten, die Stöchiometrie der Komponenten und die Temperatur massgebend beeinflusst.

Die Umsetzung der Komponenten (A), (B) und (C) in den Reaktionsstufe a₁) und/oder a₂) kann in Gegenwart eines für Polyadditions-Reaktionen an Polyisocyanaten üblichen Katalysators erfolgen. Bei Bedarf erfolgt ein Zusatz dieser Katalysatoren in Mengen von 0,01 bis 1 Gew.-% bezogen auf die Komponenten (A) und (B). Gebräuchliche Katalysatoren für Polyadditions-Reaktionen an Polyisocyanate sind bspw. Dibutylzinnoxid, Dibutylzinndilaurat (DBTL), Triethylamin, Zinn(II)-octoat, 1,4-Diaza-bicyclo[2,2,2]octan (DABCO), 1,4-Diaza-bicyclo[3,2,0]-5-nonen (DBN), 1,5-Diaza-bicyclo[5,4,0]-7-undecen (DBU).

Die Komponente (A) (i) besteht aus mindestens einem hydrophob modifizierten Blockcopolymer mit zwei oder mehreren gegenüber Polyisocyanaten reaktiven Hydroxyl-Gruppen und einer mittleren Molekularmasse (Zahlenmittel) von 500 bis 6 000 Dalton, umfassend 10 bis 90 Gew.-% eines Polymers mit hydrophobierenden Eigenschaften und 90 bis 10 Gew.-% eines Polypropylenoxid-Polymers. Als geeignete hydrophob modifizierte Blockcopolymere (A)(i) können verseifungsstabile Blockcopolymere mit ABA-, BAB- oder (AB)ₙ-Struktur eingesetzt werden, wobei A ein Polymer-Segment mit hydrophobierenden Eigenschaften und B ein Polymer-Segment auf Basis Polypropylenoxid repräsentiert. Die Komponente (A)(ii) besteht aus einem hydrophoben Blockcopolymer mit zwei oder mehreren gegenüber Polyisocyanaten reaktiven Hydroxyl-Gruppen und einer mittleren Molekularmasse (Zahlenmittel) von 500 bis 6 OOO Dalton, umfassend zwei oder mehrere hydrophobe Alkylenoxide. Als geeignete hydrophobe Blockcopolymere (A)(ii) können verseifungsstabile Blockcopolymere mit A₁A₂A₃- oder (A₁A₂)ₙ-Struktur eingesetzt werden, wobei A₁, A₂ und A₃ jeweils Polymer-Segmente mit hydrophobierenden Eigenschaften repräsentieren. Als Polymer-Segmente A, A₁, A₂ oder A₃ werden Polybutylenoxid, Polydodecyloxid, Polyisoamyloxid, Poly-α-pinenoxid, Polystyroloxid, Polytetramethylenoxid, Polyoxetan, substituierte Polyoxetane, weitere aliphatische und/oder aromatische Polyoxyalkylene mit 4 bis 30 Kohlenstoffatomen pro Alkylenoxid, ,α,ω-Polymethacrylatdiole, α,ω-Dihydroxyalkylpolydimethylsiloxane, Makromonomere, Telechele oder Gemische daraus bevorzugt. Als Komponente (A)(i) wird vorzugsweise Poly-(propylenoxid)-*block*-poly-(butylenoxid)-block-poly-(propylenoxid) und/oder Poly-(propylenoxid)-*block*-poly-(styroloxid)-*block*-poly-(propylenoxid) und/oder Poly-(propylenoxid)-*block*-poly-(tetramethylenoxid)-*block*-poly-(propylenoxid) und/oder Poly-(butylenoxid)-*block*-poly-(propylenoxid)-*block*-poly-(butylenoxid) und/oder Poly-(styroloxid)-*block-*poly-(propylenoxid)-*block*-poly-(styroloxid) und als Komponente (A)(ii) Poly-(butylenoxid)-*block*-poly-(tetramethylenoxid)-*block*-poly-(butylenoxid), zusammengesetzt aus 10 bis 90 Gew.-% Polybutylenoxid und/oder Polystyroloxid und/oder Polytetramethylenoxid und 90 bis 10 Gew.-% Polypropylenoxid, mit einer Molekularmasse von 1 000 bis 3 000 Dalton eingesetzt.

Die Komponente (A)(iii) besteht aus mindestens einem hydrophob modifizierten statistischen Copolymer mit zwei oder mehreren gegenüber Polyisocyanaten reaktiven Hydroxyl-Gruppen und einer mittleren Molekularmasse (Zahlenmittel) von 500 bis 6 000 Dalton, umfassend 10 bis 90 Gew.-% eines hydrophoben Alkylenoxides in Kombination mit geeigneten Starter-Molekülen und 90 bis 10 Gew.-% Propylenoxid. Als geeignete hydrophob modifizierte statistische Copolymere (A)(iii) können verseifungsstabile statistische Copolymere aus mindestens einem hydrophoben Alkylenoxid und Propylenoxid eingesetzt werden. Als hydrophobe Alkylenoxide werden Butylenoxid, Dodecyloxid, Isoamyloxid, α-Pinenoxid, Styroloxid, Oxetan, substituierte Oxetane, weitere aliphatische und/oder aromatische Polyoxyalkylene mit 4 bis 30 Kohlenstoffatomen pro Alkylenoxid oder Gemische daraus bevorzugt. Als Komponente (A) (iii) wird vorzugsweise Poly-(butylenoxid)-*co*-poly-(propylenoxid) und/oder Poly-(dodecyloxid)-*co*-poly-(propylenoxid) und/oder Poly-(isoamyloxid)-*co*-poly-(propylenoxid) und/oderPoly-(α-pinenoxid)-*co*-poly-(propylenoxid) und/oder Poly-(styroloxid)-*co*-poly-(propylenoxid); zusammengesetzt aus 10 bis 90 Gew.-% Butylenoxid und/oder Dodecyloxid und/oder Isoamyloxid und/oder α-Pinenoxid und/oder Styroloxid und 90 bis 10 Gew.-% Propylenoxid, mit einer Molekularmasse von 2 000 bis 3 000 Dalton eingesetzt.

In den Komponenten (A)(i), (A)(ii) und (A)(iii) ist kein polymeres Ethylenoxid enthalten. In den Polymer-Segmenten A, A₁, A₂ oder A₃ ist kein polymeres Propylenoxid enthalten. Blockcopolymere oder statistische Copolymere auf Basis von Ethylenoxid und Propylenoxid sind definitiv nicht geeignet, zumal durch Ethylenoxid eine permanente Hydrophilie eingeführt wird. Die Komponenten (A)(i), (A)(ii) und (A)(iii) können zudem Polymersegmente auf Basis von Polyalkylenoxiden aufweisen, die Bisphenol-A oder andere hydrophobe Starter-Moleküle enthalten. Bei den Starter-Molekülen handelt es sich allgemein um aliphatische und/oder aromatische difunktionelle Alkohole, monofunktionelle primäre Amine, difunktionelle sekundäre Amine, Wasser oder Gemische davon.

Die Komponente (B)(i) besteht aus mindestens einem niedermolekularen und anionogenen Polyol mit zwei oder mehreren gegenüber Polyisocyanaten reaktiven Hydroxyl-Gruppen und einer oder mehreren gegenüber Polyisocyanaten inerten Carbonsäure- und/oder Sulfonsäure-Gruppen, die in Gegenwart von Basen ganz oder teilweise in Carboxylat- und/oder Sulfonat-Gruppen, überführt werden können. Die Komponente (B)(i) kann auch bereits in Form ihrer Salze mit Basen eingesetzt werden. Als niedermolekulare und anionisch modifizierbare Polyole können beispielsweise 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydroxymethyl-2-ethyl-3-hydroxypropansäure bzw. Dimethylolbuttersäure, 2-Hydroxymethyl-2-propyl-3-hydroxypropansäure bzw. Dimethylolvaleriansäure, Citronensäure, Weinsäure, [Tris-(hydroxymethyl)-methyl]-3-aminopropansulfonsäure (TAPS, Fa. Raschig GmbH), Building Blocks auf Basis von 1,3-Propansulfon (Fa. Raschig GmbH) und/oder 3-Mercaptopropansulfonsäure, Natrium-Salz. (MPS, Fa. Raschig GmbH) eingesetzt werden. Diese Building Blocks können gegebenenfalls auch Amino-Gruppen anstelle von Hydroxyl-Gruppen aufweisen. Die Molekularmasse des niedermolekularen und anionogenen Polyols B(i) beträgt 100 bis 1 000 Dalton. Bevorzugt werden Bishydroxyalkancarbonsäuren mit einer Molekularmasse von 100 bis 200 Dalton eingesetzt und insbesondere 2-Hydroxymethyl-2-methyl-3-hydroxypropansäure bzw. Dimethylolpropionsäure (Handelsname DMPA der Fa. Trimet Technical Products, Inc.).

Die Komponente (B) (ii) besteht aus mindestens einem niedermolekularen Polyol mit zwei oder mehreren gegenüber Polyisocyanaten reaktiven Hydroxyl-Gruppen und einer mittleren Molekularmasse von 50 bis 499 Dalton. Als geeignete niedermolekulare Polyole können beispielsweise 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw.1,6-Hexamethylenglykol, 2-Methyl-1 ,3-propandiol, 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit eingesetzt werden.

Die Polyol-Komponente (B)(iii) besteht aus mindestens einem höhermolekularen Polyol mit zwei oder mehreren gegenüber Polyisocyanaten reaktiven Hydroxyl-Gruppen und einer mittleren Molekularmasse (Zahlenmittel) von 500 bis 6 000 Dalton. Als geeignete polymere Polyole können polymere Polyole wie Polyalkylenglykole, aliphatische und/oder aromatische Polyester, Polycaprolactone, Polycarbonate, α,ω-Polymethacrylatdiole, α,ω-Dihydroxyalkylpolydimethylsiloxane, Makromonomere, Telechele, hydroxyfunktionelle Epoxid-Harze oder Gemische davon eingesetzt werden.

Geeignete Polyalkylenglykole sind beispielsweise Polypropylenglykole, Polytetramethylenglykole bzw. Polytetrahydrofurane sowie Umsetzungsprodukte aus monofunktionellen Polyalkylenglykolen, Polyisocyanaten und Verbindungen mit drei gegenüber Polyisocyanaten reaktiven Gruppen. Bevorzugt werden als Komponente (B) (iii) lineare bzw. difunktionelle Polypropylenglykole mit einer mittleren Molekularmasse (Zahlenmittel) von 1 000 bis 3 000 Dalton eingesetzt.

Geeignete aliphatische und/oder aromatische Polyester (B)(iii) sind beispielsweise Kondensate auf Basis von 1,2-Ethandiol bzw. Ethylenglykol und/oder 1,4-Butandiol bzw. 1,4-Butylenglykol und/oder 1,6-Hexandiol bzw. 1,6-Hexamethylenglykol und/oder 2,2-Dimethyl-1,3-propandiol bzw. Neopentylglykol und/oder 2-Ethyl-2-hydroxymethyl-1,3-propandiol bzw. Trimethylolpropan sowie 1, 6-Hexandisäure bzw. Adipinsäure und/oder 1, 2-Benzoldicarbonsäure bzw. Phthalsäure und/oder 1,3-Benzoldicarbonsäure bzw. Isophthalsäure und/oder 1,4-Benzoldicarbonsäure bzw. Terephthalsäure und/oder 5-Sulfoisophthalsäure-Natrium bzw. deren Ester sowie Umsetzungsprodukte aus Epoxiden und Fettsäuren. Bevorzugt werden lineare bzw. difunktionelle aliphatische oder aromatische PolyesterPolyole mit einer mittleren Molekularmasse (Zahlenmittel) von 1 000 bis 3000 Dalton eingesetzt.

Polycaprolactone auf Basis von ε-Caprolacton, Polycarbonate auf Basis von Dialkylcarbonaten und Glykolen und Kombinationen daraus gehören ebenfalls zur Gruppe der Polyester. Bevorzugt werden lineare bzw. difunktionelle Typen mit einer mittleren Molekularmasse (Zahlenmittel) von 1 000 bis 3 000 Dalton eingesetzt.

Als α,ω-Polymethacrylatdiole (TEGO® Diol BD 1000, TEGO® Diol MD 1000 N, TEGO® Diol MD 1000 X, Fa. Tego Chemie Service GmbH) und α,ω-Dihydroxyalkylpolydimethylsiloxane werden bevorzugt lineare bzw. difunktionelle Typen mit einer mittleren Molekularmasse (Zahlenmittel) von 500 bis 3 000 Dalton eingesetzt.

Die Polyisocyanat-Komponente (C) besteht aus mindestens einem Polyisocyanat, Polyisocyanat-Derivat oder Polyisocyanat-Homologen mit zwei oder mehreren aliphatischen und/oder aromatischen Isocyanat-Gruppen. Geeignet sind insbesondere die in der Polyurethan-Chemie hinreichend bekannten Polyisocyanate oder Kombinationen daraus. Als geeignete aliphatische Polyisocyanate können beispielsweise 1,6-Diisocyanatohexan (HDI), 1-Isocyanato-5-isocyanatomethyl-3,3,5-trimethylcyclohexan bzw. Isophorondiisocyanat (IPDI), Bis-(4-isocyanatocyclohexyl)-methan (H₁₂MDI), 1,3-Bis-(1-isocyanato-1-methyl-ethyl)-benzol (m-TMXDI) bzw. technische Isomeren-Gemische der einzelnen aliphatischen Polyisocyanate eingesetzt werden. Als geeignete aromatische Polyisocyanate können beispielsweise 2,4-Diisocyanatoluol bzw. Toluoldiisocyanat (TDI), Bis-(4-isocyanatophenyl)-methan (MDI) und gegebenenfalls dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" auf Basis von Bis-(4-isocyanatocycio-hexyl)-methan (H₁₂MDI), 1,6-Diisocyanatohexan (HDI), 1-Isocyanato-5-isocyanatomethyl-3,3,5-trimethylcyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethah-Gruppen aufweisende Derivate dieser Diisocyanate, bei denen der Rest-Gehalt: an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit Isocyanat-Gruppen unterschiedlicher Reaktivität bevorzugt.

Das NCO/OH-Equivalentverhältnis der Komponenten (A), (B) und (C) wird vorzugsweise auf einen Wert von 1,25 bis 2,5, besonders bevorzugt von 1,4 bis 2,0 eingestellt.

Vorzugsweise werden Polyisocyanate mit Isocyanat-Gruppen unterschiedlicher Reaktivität eingesetzt, um engere Molekular-Massen-Verteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der DispergierEigenschaften der Polyurethan-Prepolymere ist meist nicht erforderlich. Die besondere Struktur der Prepolymere ermöglicht die Herstellung von Produkten mit außerordentlich hohen Festkörper-Gehalten. Außerdem werden aufgrund der gleichmäßigen Verteilung der Carboxylat- bzw. Sulfonat-Gruppen über das Polyurethan-Polymer nur sehr geringe Ladungsdichten für die Stabilisierung der entsprechenden Polyurethan-Dispersionen benötigt.

Das Polyurethan-Prepolymer aus Reaktionsstufe a₂) wird in der nachfolgenden Reaktionsstufe a₃) vor und/oder während der Dispergierung in 100 bis 5 000 Gew.-Teilen Wasser mit 2 bis 20 Gew.-Teilen einer Neutralisations-Komponente (D) zur vollständigen oder teilweisen Neutralisation der Carbonsäure- und/oder Sulfonsäure-Gruppen umgesetzt (direkte oder indirekte Neutralisation). Im Falle einer direkten Neutralisation wird die Neutralisations-Komponente (C) bereits vor der Dispergierung in Wasser in das Polyurethan-Prepolymer eingebracht, im Falle einer indirekten Neutralisation wird die Neutralisations-Komponente (C) vor der Dispergierung im Wasser vorgelegt. Bei Bedarf kann auch eine Kombination aus direkter und indirekter Neutralisation angewendet werden.

Die Reaktions-Stufe a₃) wird vorzugsweise bei einer Temperatur von 40 bis 60 °C, insbesondere bei ca. 50 °C, durchgeführt.

Die Neutralisations-Komponente (C) besteht aus einer oder mehreren Basen, die zur vollständigen oder teilweisen Neutralisation der Carbonsäure-und/oder Sulfonsäure-Gruppen dienen. Sofern die Komponente (B)(i) bereits in Form ihrer Salze vorliegt, kann auf die Neutralisations-Komponente (D) verzichtet werden. Als geeignete Basen können beispielsweise tertiäre Amine wie (N,N-Dimethylethanolamin, N-Methyldiethanolamin, Triethanolamin, N,N-Dimethylisopropanolamin, N-Methyldiisopropanolamin, Triisopropylamin, N-Methylmorpholin, N-Ethylmorpholin, Triethylamin, Ammoniak oder Alkalihydroxide wie Lithiumhydroxid, Natriumhydroxid, Kaliumhydroxid oder Gemische davon eingesetzt werden. Bevorzugt werden tertiäre Amine und insbesondere Triethylamin eingesetzt.

Die Neutralisations-Komponente (C) wird in einer solchen Menge zugegeben, dass der Neutralisations-Grad bezogen auf die freien Carbonsäure- und/oder Sulfonsäure-Gruppen des Polyurethan-Prepolymers vorzugsweise bei 70 bis 100 Equivalent-%, besonders bevorzugt bei 80 bis 90 Equivalent-%, liegt. Bei der Neutralisation werden aus den Carbonsäure-und/oder Sulfonsäure-Gruppen Carboxylat- und/oder Sulfonat-Gruppen gebildet, die zur anionischen Modifizierung bzw. Stabilisierung der Polyurethan-Dispersion dienen.

Bei der Dispergierung wird das Polyurethan-Prepolymer in das Dispergier-Medium überführt und bildet dabei eine Polyurethan-Prepolymer-Dispersion aus. Das neutralisierte Polyurethan-Prepolymer bildet dabei Micellen, die an der Oberfläche stabilisierende Carboxylat- und/oder Sulfonat-Gruppen und im Inneren reaktive Isocyanat-Gruppen aufweisen. Alle kationischen GegenIonen zu den anionischen Carboxylat- und/oder Sulfonat-Gruppen sind im Dispergier-Medium gelöst. Die Begriffe "Dispergierung" bzw. Dispersion" beinhalten, dass neben dispergierten Komponenten mit micellarer Struktur auch solvatisierte und/oder suspendierte Komponenten enthalten sein können. Für die Überführung des Polyurethan-Prepolymers in die wässrige Phase kann entweder das Polyurethan-Prepolymer in das Dispergier-Medium oder das Dispergier-Medium in das Polyurethan-Prepolymer (Invers-Verfahren) eingerührt werden.

Der Härtegrad des verwendeten Wassers ist für das Verfahren unerheblich, die Verwendung von destilliertem oder entsalztem Wasser ist daher nicht erforderlich. Hohe Härtegrade bewirken eine weitere Verringerung der Wasseraufnahme der Polyurethan-Dispersionen und der Polyurethan-Polymer-Hybrid-Dispersionen, ohne deren Material-Eigenschaften negativ zu beinflussen.

Das neutralisierte und dispergierte Polyurethan-Prepolymer (Polyurethan-Prepolymer-Dispersion) aus Reaktonsstufe a₃) wird in der anschließenden Reaktionsstufe a₄) mit 0,1 bis 2 Gew.-% einer Kettenverlängerungs-Komponente (E) umgesetzt.

Die Reaktionsstufe a₄) wird vorzugsweise bei einer Temperatur von 30 bis 50 °C, insbesondere bei ca. 40 °C, durchgeführt.

Die Kettenverlängerungs-Komponente (E) besteht aus mindestens einem Polyamin mit zwei oder mehreren gegenüber Polyisocyanaten reaktiven Amino-Gruppen. Als geeignete Polyamine können beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS®) und Ethylendiamin, Addukte aus Salzen der (Meth)acrylsäure und Ethylendiamin, Addukte aus 1,3-Propansulfon und Ethylendiamin oder beliebige Kombination dieser Polyamine. Bevorzugt werden difunktionelle primäre Amine und insbesondere Ethylendiamin eingesetzt.

Die Kettenverlängerungs-Komponente (E) wird in einer solchen Menge zugegeben, dass der Kettenverlängerungs-Grad bezogen auf die freien Isocyanat-Gruppen des Polyurethan-Prepolymers bei 50 bis 100 Equivalent-%, vorzugsweise bei 70 bis 80 Equivalent-%, liegt. Die Kettenverlängerungs-Komponente (E) kann in vorab entnommenen Anteilen des Wassers im Gewichtsverhältnis 1 : 1 bis 1 : 10 verdünnt werden, um die zusätzliche Exothermie durch die Hydratisierung der Amine zurückzudrängen.

Die Kettenverlängerung der Polyurethan-Prepolymer-Dispersion führt zum Aufbau der Molekularmasse innerhalb der Micellen und zur Bildung einer Polyurethan-Polyharnstoff-Dispersion hoher Molekularmasse. Die Kettenverlängerungs-Komponente (E) reagiert dabei mit reaktiven Isocyanat-Gruppen wesentlich rascher als Wasser. Im Anschluss an die Reaktions-Stufe a₄) werden eventuell noch vorhandene freie isocyanat-Gruppen mit Wasser vollständig kettenverlängert.

Der Festkörper-Gehalt an Polyurethan-Polymer bestehend aus den Komponenten (A) bis (E) wird vorzugsweise auf 30 bis 70 Gew.-%, besonders bevorzugt auf 40 bis 60. Gew.-%, bezogen auf die Gesamtmenge der Polyurethan-Dispersion eingestellt.

Der Gehalt an Carboxylat- und/oder Sulfonat-Gruppen im Polyurethan-Polymer aus den Komponenten (A) bis (E) wird vorzugsweise auf 10 bis 50 meq·(100 g)⁻¹, besonders bevorzugt auf 15 bis 45 meq·(100 g)⁻¹, und die Säurezahl vorzugsweise auf 5 bis 25 meq KOH·g⁻¹, besonders bevorzugt 7,5 bis 22,5 meq KOH·g⁻¹, eingestellt.

Zur weiteren Durchführung dieses Verfahrens kann unter Anwendung der bei Polymerisationen üblichen Techniken in der Reaktionsstufe b₁) die Polyurethan-Dispersion aus Reaktionsstufe a₅) mit einem vorgefertigten Gemisch aus 117,5 bis 3 200 Gew.-%-Teilen der Monomer-Komponente (F) und 0,05 bis 50 Gew.-Teilen der Initiator-Komponente (G) versetzt werden. Das Initiator/Monomer-Molverhältnis der Komponenten (G) und (F) wird vorzugsweise im Bereich von 0,001 bis 0,05 eingestellt. Gemäß einer bevorzugten Ausführungsform wird ein Teil des Wassers aus Stufe a₄) erst in Stufe b₁) zur Einstellung des Festkörper-Gehaltes zugegeben.

Die Reaktionsstufe b₁) wird vorzugsweise bei einer Temperatur von 15 bis 35 ° C, insbesondere bei 20 bis 30 °C, durchgeführt.

Die Monomer-Komponente (F) besteht aus einem oder mehreren Monomeren mit einer oder mehreren radikalisch polymerisierbaren Doppelbindungen. Als geeignete Monomere können beispielsweise Acrylsäure, Acrylsäureamid, Acrylsäuredimethylamid, Acrylsäurenitril, Acrylsäuremethylester, Acrylsäureethylester, Acrylsäurevinylester, Acrylsäurepropylester, Acrylsäureisopropylester, Acrylsäurebutylester, Acrylsäureisobutylester, Acrylsäure-tert.-butylester, Acrylsäurehexylester, Acrylsäurecyclohexylester, Acrylsäureoctylester, Acrylsäure-(2-ethylhexylester), Acrylsäure-(3,3,5 trirnethylhexylester), Acrylsäuredodecylester, Acrylsäureisododecylester, Acrylsäureoctadecylester sowie Acrylsäure-(2-hydroxyethylester), Acrylsäure-(hydroxypropylester) (Isomeren-Gemisch), Acrylsäure-[(2-dimethylamino)-ethylester], Acrylsäure-[(3-dimethylamino)-propylesterl, Acrylsäure-(3-sulfopropylester) Kaliumsalz, Methacrylsäure, Methacrylsäureanhydrid, Methacrylsäureamid, Methacrylsäuredimethylamid, Methacrylsäurenitril, Methacrylsäuremethylester, Methacrylsäureethylester, Methcrylsäurevinylester, Methacrylsäurepropylester, Methacrylsäureisopropylester, Methacrylsäurebutylester, Methacrylsäureisobutylester, Methacrylsäure-tert.-butylester, Methacrylsäurehexylester, Methacrylsäureyclohexylester, Methacrylsäureoctylester, Methacrylsäure-(2-ethylhexylester), Methacrytsäuredodecylester, Methacrylsäureisododecylester, Methacrylsäureoctadecylester, Methacrylsäurebenzylester sowie Methacrylsäure-(2-hydroxyethylester), Methacrylsäure-(hydroxypropylester) (Isomeren-Gemisch), Methacrylsäure-[(2-dimethylamino)-ethylester], Methacrylsäure-2,3-epoxypropylester, Methacrylsäure-[2-(acetoacetoxy)-ethytester],Methacrylsäure-(3-sulfopropylester)Kaliumsalz, Dimethyl-[2-(methacryloyloxy)-ethyl]-(3-sulfopropyl)-ammonium-betain, Dimethyl-[3-(methacryloylamino)-propyl]-(3-sulfopropyl)-ammonium-betain, 2-Acrylamido-2-methylpropan-1-sulfonsäure (AMPS®) und deren Salze, Styrol, Methylstyrol, Ethylstyrol, Divinylbenzol, Styrolsulfonsäure, Natrium-Salz eingesetzt werden. Daneben können auch noch (Meth)acrylsäureester mit einer radikalisch polymerisierbaren Doppelbindung auf Basis von Methoxypolyethylenglykol, (Meth)acrylsäureester mit zwei oder mehreren radikalisch polymerisierbaren Doppelbindungen auf Basis von niedermolekularen und/oder hochmolekularen polymeren Polyolen oder aber Vinyltriisopropoxysilan (CoatOSil 1706, Fa. Witco) und gamma-Methacryloyloxypropyltriisopropoxysilan (CoatOSil 1757, Fa. Witco) oder Gemischen davon eingesetzt werden. Grundsätzlich ebenfalls geeignet sind Vinylhalogenide wie Vinylchlorid, Vinylester wie Vinylacetat, 1,3-Butadien, Isopren sowie Maleinsäureanhydrid und dessen Derivate. Bevorzugt werden Acrylsäure und deren Derivate und/oder Methacrylsäure und deren Derivate und/oder Styrol und dessen Derivate eingesetzt, vorzugsweise jedoch Kombinationen aus 5 bis 95 Gew.-% Methylmethacrylat und 5 bis 95 Gew.-% n-Butylacrylat.

Die Initiator-Komponente (G) besteht aus mindestens einem lipophilen Radikal-Initiator mit einer oder mehreren thermisch labilen Azo- oder Peroxo-Gruppen, der bei einer Zerfallstemperatur im Bereich von 40 bis 120 °C eine Halbwertszeit von einer Stunde aufweist.

Als geeignete Radikal-Initiatoren können beispielsweise anorganische Peroxide wie Ammoniumperoxodisulfat, Natriumperoxodisulfat, Kaliumperoxodisulfat, Wasserstoffperoxid, organische Peroxide wie Percarbonate, Diacylperoxide wie Dibenzoylperoxid, Alkylperoxide wietert.-Butylhydroperoxid, Cumolhydroperoxid, Dialkylperoxide wie Di-tert.-butylperoxid, Acylalkylperoxide wie tert. Butylperoxybenzoat, AzoInitiatoren wie 2,2'-Azobis(2-methylbutyronitril), 2,2'-Azobis(2-methylpropionitril) bzw. 2,2'-Azoisobutyronitril oder Gemische davon eingesetzt werden. Bevorzugt werden Radikal-Initiatoren eingesetzt, die bei einer Zerfallstemperatur von 70 bis 90 °C eine Halbwertszeit von 1 Stunde aufweisen, besonders bevorzugt jedoch 2,2'-Azoisobutyronitril.

In der nachfolgenden Reaktionssstufe b₂) wird durch den thermischen Zerfall der Komponente (G) eine radikalische Polymerisation der Komponente (F) innerhalb der Micellen der Polyurethan-Basis-Dispersion durchführt. Die Emulsionspolymerisation in der Reaktionsstufe b₂) wird vorzugsweise ohne weitere Emulgatoren durchgeführt. Nach beendeter Polymerisation wird die fertige Polyurethan-Polymer-Hybrid-Dispersion gemäß einer bevorzugten Ausführungsform abgekühlt und über ein 100m-Sieb filtriert, eventuell vorhandener erhärteter Schaum wird dabei vollständig abgetrennt. Die Lagerstabilität der Polyurethan-Polymer-Hybrid-Dispersionen über längere Zeiträume ist daher gewährleistet. Die Filme der Polyurethan-Polymer-Hybrid-Dispersionen weisen im Vergleich zu den Filmen der zugrundeliegenden Polyurethan-Dispersionen eine nochmals verringerte Hydrophilie auf.

Der Vorteil dieses Herstellungsverfahrens liegt darin, dass Monomere und Initiator zusammen bei Raumtemperatur zugegeben werden können und dass für deren Stabilisierung in der Polyurethan-Dispersion keinerlei zusätzliche (externe) Emulgatoren notwendig sind. Die Monomeren und der Initiator werden durch die Micellen der Polyurethan-Dispersion emulgiert. Bei der radikalischen Polymerisation wird innerhalb der Micellen ein *interpenetrating network* aus Polyurethan-Harzen und Polymer-Harzen gebildet, die durch eine physikalische Vernetzung miteinander verbunden sind. Bei der Hybridisierung verringert sich die Ladungsdichte bzw. die Zahl der Carboxylat-Gruppen im Polyurethan-Polymer-Hybrid [meq•(100 g)⁻¹] üblicherweise beträchtlich. Die Ladungsdichte der Micellen der Polyurethan-Dispersion bzw. der anionisch modifizierten Polyurethan-Polymeren ist in jedem Fall ausreichend groß, um zusätzlich sowohl die Monomeren als auch die aus den Monomeren hergestellten Polymeren ausreichend stabilisieren zu können.

Die Reaktionsstufe b₂) wird vorzugsweise bei einer Temperaturdifferenz von 10°C bezogen auf die Temperatur, bei der die Komponente (G) eine Halbwertszeit von 1 Stunde aufweist, durchgeführt. Bei Verwendung von 2,2'-Azobisisobutyronitril als Komponente (H) wird die Reaktionsstufe b₂) vorzugsweise bei einer Temperatur von 80±10 °C durchgeführt.

Das reine Polymer aus den Komponenten (G) und (H) in Reaktionsstufe b₂) weist eine bevorzugte Glasübergangstemperatur von -50 bis + 100 °C, insbesondere -25 bis +25 °C, auf. Die Berechnung erfolgt mit Hilfe der Fox-Gleichung (Elias, An Introduction to Polymer Science, VHC, Weinheim 1997, Seite 320).

Der Festkörper-Gehalt an Polyurethan-Polymer-Hybrid bestehend aus den Komponenten (A) bis (G) wird vorzugsweise auf 30 bis 70 Gew.-%, besonders bevorzugt auf 40 bis 60 Gew.-%, bezogen auf die Gesamtmenge der Polyurethan-Polymer-Hybrid-Dispersion eingestellt.

Das Verhältnis der anteiligen Festkörper-Gehalte aus Polyurethan-Harz aus den Komponenten (A) bis (E) und Polymer-Harz aus den Komponenten (F) und (G) wird vorzugsweise auf 20 zu 80 bis 80 zu 20 Gew.-%, besonders bevorzugt auf 40 zu 60 bis 60 zu 40 Gew.-%, eingestellt.

Der Gehalt an Carboxylat- und/oder Sulfonat-Gruppen im Polyurethan-Polymer-Hybrid aus den Komponenten (A) bis (G) wird vorzugsweise auf 5 bis 25 meq·(100 g)⁻¹, besonders bevorzugt auf 10 bis 20 meq·(100 g)⁻¹, und die Säurezahl vorzugsweise, auf 2,5 bis 15 meq KOH·g⁻¹, besonders bevorzugt auf 5 bis 12,5 meq KOH·g⁻¹, eingestellt.

Die mittleren Partikelgrössen der Polyurethan-(Polymer-Hybrid-) Dispersionen betragen vorzugsweise 50 bis 500 nm, besonders bevorzugt 100 bis 400 nm.

Die mittleren Molekularmassen (Zahlenmittel) der Polyurethan-(Polymer-Hybrid-)Dispersionen betragen vorzugsweise 50 000 bis 500 000 Dalton.

Der Restmonomer-Gehalt beträgt vorzugsweise weniger als 0,1 Gew.-% bezogen auf die Gesamtmenge der Polyurethan-Polymer-Hybrid-Dispersion.

Die reinen Polyurethan-(Polymer-Hybrid-)Dispersionen aus den Komponenten (A) bis (E) oder (A) bis (G) zeigen bei einer Auftragsmenge von 0,8 kg m⁻² nach 7 d Trocknung bei 23 °C und 50 % relativer Luftfeuchtigkeit sowie 7 d Wasserlagerung bei 23 °C eine Wasseraufnahme von 0,25 bis 25 Gew-% an destilliertem Wasser.

Zur Verringerung der Viskosität der Polyurethan-Prepolymere oder zur Verbesserung der Koaleszenz der Polyurethan-(Polymer-Hybrid-)-Dispersion können während und/oder nach der Herstellung gemäß den Reaktionsstufen a) und b) organische Lösemittel, wie N-Methylpyrrolidon, Glykolether, wie Dipropylenglykoldimethylether (Proglyde DMM®), Aceton bzw. 2-Propanon, Methylethylketon bzw. 2-Butanon, gegebenenfalls Reaktivverdünner eingesetzt werden. Nach der Herstellung können diese organischen Lösemittel gegebenenfalls durch Redestillation wieder entfernt werden. Bevorzugt enthält die Polyurethan-(Polymer-Hybrid-)Dispersion weniger als 10 Gew.-% an organischen Lösemitteln. Gemäß einer besonders bevorzugten Ausführungsform liegt die Polyurethan-(Polymer-Hybrid-) Dispersion lösemittelfrei vor.

In einer besonders bevorzugten Ausführungsform wird die Polyurethan-(Polymer-Hybrid-)Dispersion mit Hilfe des *High Solids Zero VOC Process* hergestellt (vgl. WO 99/50 325 und DE 199 49 971). Dieses Verfahren stellt eine universelle Methode zur Herstellung von maßgeschneiderten Polyurethan-Dispersionen und Polyurethan-Polymer-Hybrid-Dispersionen dar. Die geringen technischen Anforderungen des Verfahrens und der völlige Verzicht auf flüchtige und/oder nichtflüchtige organische Lösemittel ermöglichen hohe Raum/Zeit-Ausbeuten bei niedrigen Kosten. Die Performance der erfindungsgemäßen Polyurethan-(Polymer-Hybrid) Dispersionen hinsichtlich Lösemittel-Freiheit, Festkörper-Gehalt, Material-Eigenschaften und sind bemerkenswert. Hervorzuheben sind außerdem die Einfachheit und Reproduzierbarkeit des Verfahrens sowie die Lagerstabilität der Produkte.

Bedingt durch die ideal linear segmentierte Struktur der Polyurethan-Polymeren resultiert intermolekular eine sehr ausgeprägte und regelmäßige Domänen-Strukturaus Hartsegmenten und Weichsegmenten. Hartsegmente bestehen aus Strukturelementen mit starren Urethan- und HarnstoffGruppen sowie kurzkettigen Diolen, die eine starke interchenare Wechselwirkung ausüben. Weichsegmente bestehen aus flexiblen StrukturElementen mit Carbonat-, Ester- und Ether-Gruppen, die eine schwache interchenare Wechselwirkung ausüben. Die Polyurethan-Dispersionen weisen aufgrund ihres Herstellverfahrens eine ideal linear segmentierte Struktur auf. Der Ausdruck "ideal linear segmentierte Struktur" kennzeichnet hierbei, dass die Polyurethan-Polymere einen linearen Aufbau besitzen und alle Aufbau-Komponenten in regelmässiger Anordnung und Sequenz enthalten, woraus die besonderen Material-Eigenschaften der Polyurethan-Dispersionen resultieren. Die exzellenten Material-Eigenschaften der Polyurethan-Dispersionen werden bei geeigneter Prozessführung auf die Polyurethan-Polymer-Hybrid-Dispersionen übertragen. Je nach Wahl der Polyurethan-Dispersionen und der Monomer-Komponente können Dehnung und Dehnung bei der Zugfestigkeit über weite Bereiche nahezu beliebig variiert werden. Die Wasseraufnahmen der erfindungsgemäßen Polyurethan-(Polymer-Hybrid-)Dispersionen auf Basis von hydrophob modifizierten Blockcopolymeren und/oder hydrophob modifizierten statistischen Copolymeren liegen deutlich unter denen vergleichbarer Polyurethan-(Polymer-Hybrid-)Dispersionen auf Basis von Polypropylenglykolen. Beim Übergang von den erfindungsgemäßen Polyurethan-Dispersionen zu den erfindungsgemäßen Polyurethan-Polymer-Hybrid-Dispersionen wird eine weitere Verringerung der Wasseraufnahme beobachtet, da die Ladung verringert wird und weitere hydrophobe Polymere durch die Monomere eingeführt werden.

Ein weiterer. Gegenstand der vorliegenden Erfindung betrifft die Verwendung von Polyurethan-(Polymer-Hybrid)-Dispersionen mit verringerter Hydrophilie in bauchemischen Produkten.

Obgleich die erfindungsgemäß formulierte Polyurethan-(Polymer-Hybrid-) Dispersion in ein- und zweikomponentiger Form zum Einsatz kommen kann, ist die einkomponentige Form wegen der besseren Handhabbarkeit als bevorzugt anzusehen. Im Falle einer zweikomponentigen Applikation werden die erfindungsgemäß formulierten Polyurethan-(Polymer-Hybrid-) Dispersionen als Bindemittel-Komponente und wasseremulgierbare Polyisocyanate als Härter-Komponente eingesetzt.

Die erfindurigsgemäß vorgeschlagenen Polyurethan-(Polymer-Hybrid-) Dispersionen mit verringerter Hydrophilie eignen sich als Bindemittel bei der Herstellung von Formulierungen für Sportbodenbeläge und Tennisplatzbeläge, z.B. in Form von:
a) Bindemitteln für Elastikschichten, umfassend Gummigranulate oder Fasern sowie gegebenenfalls Zuschlagstoffe,
b) Haftvermittlern oder Grundierungen auf die Untergründe von Sportbodenbelägen,
c) Spritzbeschichtungen, gegebenenfalls mit Struktur-Füllstoffen, zur Aufbringung auf elastische oder starre Untergründe,
d) Verläufsbeschichtungen zur Aufbringung auf elastische oder starre Untergründe,
e) Spachtelmassen für den Porenverschluss von elastischen oder starren Untergründen,
f) Klebstoffe zur Verklebung von vorgefertigten Elastikschichten,
g) Versiegelungen, gegebenenfalls in pigmentierter Form, sowie
h) Linierungsfarben.

Die erfindungsgemäß vorgeschlagenen Polyurethan-(Polymer-Hybrid-) Dispersionen mit verringerter Hydrophilie eignen sich daneben als Bindemittel in Formulierungen für rissüberbrückende Beschichtungssysteme in Form von:
a) Grund-, Schwimm- oder Deckschichten, sowie Spritzbeschichtungen oder Versiegelungen auf vorzugsweise grundierten Bauwerksoberflächen,
b) gegebenenfalls flammgeschützten Dach-Beschichtungen oder - Anstrichen sowie
c) gegebenenfalls flammgeschützten Abdichtungen von Bauwerken im Tage- oder Untertagebau.

Die erfindungsgemäßen Polyurethan-(Polymer-Hybrid-)Dispersionen mit verringerter Hydrophilie können im Baubereich außerdem als Bindemittel für Beschichtungen, Dichtstoffe, Druckfarben, Farben und Lacke, Klebstoffe, Membranen für die Oberflächen von mineralischen Baustoffen wie z.B. Beton, Gips, Keramik, Ton, Zement, sowie für die Oberflächen von Glas, Gummi, Holz und Holzwerkstoffen, Kunststoff, Metall, Papier, Verbundwerkstoffen und für die Vergütung von hydraulischen Bindemitteln eingesetzt werden.

Darüberhinaus eignen sich die erfindungsgemäßen Polyurethan-(Polymer-Hybrid-)Dispersionen als Bindemittel für die Beschichtung von echten und synthetischen Ledern sowie Papier und Kartonagen und für die Herstellung von synthetischen Ledern.

Es ist prinzipiell auch möglich, innerhalb von Formulierungen die erfindungsgemäßen Polyurethan-(Polymer-Hybrid-)Dispersionen mit verringerter Hydrophilie mit wässrigen oder nichtwässrigen Bindemitteln zu kombinieren und/oder Formulierungen auf Basis der erfindungsgemäßen Polyurethan-(Polymer-Hybrid-) Dispersionen mit verringerter Hydrophilie mit Formulierungen auf Basis von wässrigen oder nichtwässrigen Bindemitteln zu kombinieren. Der Begriff wässrige oder nichtwässrige Bindemittel kennzeichnetdabei wasserbasierende Polyurethane, Polymer-Dispersionen, redispergierbare Polymer-Pulver oder nichtwässrige lösemittelhaltige oder lösemittelfreie und gegebenenfalls reaktive Polymere.

Bei den einzelnen Formulierungsbestandteilen handelt es sich Füllstoffe, Pigmente, Weichmacher, Fasermaterialien, Entschäumer, Entlüfter, Gleit- und Verlaufadditive, Dispergieradditive, Substratnetzadditive, Hydrophobierungsmittel, Rheologiehilfsmittel, Haftvermittler, Flammschutzmittel, Frostschutzmittel, Antioxidantien, UV-Stabilisatoren,-Konservierungsmitteln.

Die Formulierungs-Bestandteile können während und/oder nach der Herstellung der Polyurethan-(Polymer-Hybrid-)Dispersionen eingebracht werden. Im Falle einer *in situ* formulierten Polyurethan-(Polymer-Hybrid-) Dispersionen wird die Formulierung in das Herstellungsverfahren des Bindemittels integriert, d.h. die (inerten) Formulierungs-Bestandteile werden bereits ganz oder teilweise im Dispergiermedium vorgelegt.

Die Applikation der erfindungsgemäßen Polyurethan-(Polymer-Hybrid-) Dispersionen mit verringerter Hydrophilie erfolgt mit den aus der Lacktechnologie bekannten Methoden, wie z.B. Fluten, Gießen, Rakeln, Spritzen, Streichen, Tauchen, Walzen.

Die nachfolgenden Beispiele sollen die Erfindung näher veranschaulichen.

### Beispiele

### Beispiele A: Hydrophobierte Polyalkylenoxide

### Beispiel A.1: Poly-(propylenoxid)-block-poly-(butylenoxid)-block-poly-(propylenoxid) mit 42 Gew.-% eines Polybutylenoxid-Mittelblocks

0,2 g (1 mol) 1,4-Butandiol und 16,8 g 50%ige wässrige KOH wurden in einen Reaktor gegeben. Nach sorgfältiger Spülung mit Reinststickstoff wurde bei 120 °C das vorhandene Wasser abdestilliert. Nach Abkühlung auf 115 °C wurden 1000 g (13,9 mol) 1,2-Butylenoxid innerhalb von 1 ½ Stunden zugegeben. Nach weiteren 2½ Stunden war die Anlagerung des Butylenoxids beendet. Anschließend wurden 1410 g (24,3 mol) Propylenoxid so schnell in den Reaktor dosiert, dass die Innentemperatur 120 °C und der Druck 2,5 bar nicht überschritten. Nach vollständiger Einleitung des Propylenoxids wurde die Temperatur so lange auf 115 °C gehalten, bis ein konstanter Manometerdruck das Ende der Nachreaktion anzeigte. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandenen Kaliumphosphat durch Filtration zusammen mit einem Filterhilfsmittel entfernt.

Das Molekulargewicht aus der Bestimmung der Hydroxylzahl bei einer angenommenen Funktionalität von 2 betrug M = 2113 g/mol.

| Charakteristik | farblose Flüssigkeit |
|---|---|
| Viskosität (DIN 53015) | ca. 200 mPa s (25 °C) |
| Hydroxyl-Zahl | 53,1 mg KOH g⁻¹ |
| Molekularmasse (ber.) | 2113 Dalton |

### Beispiel A.2: Poly-(propylenoxid)-block-poly-(tetramethylenoxid)-block-poly-(propylenoxid) mit 33 Gew.-% eines Polytetrahydrofuran-Mittelblocks

In analoger Weise, wie für das hydrophobierte Polyalkylenoxid aus Beispiel A.1 beschrieben, wurde das erfindungsgemäße und erfindungsgemäß zu verwendende hydrophobierte Polyalkylenoxid A.2 hergestellt.

Als Ausgangstoffe dienten kommerziell erhältliches Polytetrahydrofuran (506,5 g, 0,78 mol), BASF Handelsname "Polytetrahydrofuran 650 S", 50%ige wässrige KOH (6,8 g) und PO (1446 g, 24,9 mol).

Das Molekulargewicht aus der Bestimmung der Hydroxylzahl bei einer angenommenen Funktionalität von 2 betrug M = 1982 g/mol.

| Charakteristik | farblose Flüssigkeit. |
|---|---|
| Viskosität (DIN 53015) | ca. 600 mPas (25°C) |
| Hydroxyl-Zahl | 56.6 mg KOHg⁻¹ |
| Molekularmasse (ber.) | 1982 Dalton |

### Beispiel A.3: Poly-(propylenoxid)-block-poly-(styroloxid)-block-Poly-(propylenoxid) mit 21 Gew.-% eines Polystyroloxid-Mittelblocks

In analoger Weise, wie für das hydrophobierte Polyalkylenoxid aus Beispiel A.1 beschrieben, wurde das erfindungsgemäß zu verwendende hydrophobierte Polyalkylenoxid A.3 hergestellt.

Als Ausgangstoffe dienten 1,4-Butandiol (90,1 g, 1 mol), 50%ige wässrige KOH (16,8 g), Styroloxid (500 g, 4,2 mol) und PO (1910 g, 32,9 mol).

Das Molekulargewicht aus der Bestimmung der Hydroxylzahl bei einer angenommenen Funktionalität von 2 betrug M = 1748 g/mol.

| Charakteristik | farblose Flüssigkeit |
|---|---|
| Viskosität (DIN 53015) | ca. 900 mPas (25°C) |
| Hydroxyl-Zahl | 64.2 mg KOHg⁻¹ |
| Molekularmasse (ber.) | 1748 Dalton |

### Beispiel A.4: Poly-(butylenoxid)-co-poly-(propylenoxid) mit 42 % Gew.-% Butylenoxid

90,2 g (1 mol) 1,4-Butandiol und 16,8 g 50%ige wässrige KOH wurden in einen Reaktor gegeben. Nach sorgfältiger Spülung mit Reinststickstoff wurde bei 120 °C das vorhandene Wasser abdestilliert. Nach Abkühlung auf 115 °C wurde ein Gemisch aus 1000 g (13,9 mol) 1,2-Butylenoxid und 1410 g (24,3 mol) Propylenoxid so schnell in den Reaktor dosiert, dass die Innentemperatur 120 °C und der Druck 2,5 bar nicht überschritten. Nach vollständiger Einleitung des Monomergemischs wurde die Temperatur so lange auf 115 °C gehalten, bis ein konstanter Manometerdruck das Ende der Nachreaktion anzeigte. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandenen Kaliumphosphat durch Filtration zusammen mit einem Filterhilfsmittel entfernt.

Das Molekulargewicht aus der Bestimmung der Hydroxylzahl bei einer angenommenen Funktionalität von 2 betrug M = 2082 g/mol.

### Beispiel A.5: Poly-(butylenoxid)-block-poly-(propylenoxid)-block-poly-(butylenoxid) mit 42 % Gew.-% Butylenoxid

Die Herstellung erfolgte in Analogie zu Beispiel A.1.

### Beispiel A.6: Poly-(propylenoxid)-block-Poly-(butylenoxid)-block-Poly-(propylenoxid) mit 60 % Gew.-% eines Polybutylenoxid-Mittelblocks

Die Herstellung erfolgte in Analogie zu Beispiel A.1.

### Beispiel A.7: Poly-(propylenoxid)-block-poly-(butylenoxid)-block-poly-(dodecenoxid)-block-poly-(butylenoxid)-block-Poly-(propylenoxid)

Die Herstellung erfolgte in Analogie zu Beispiel A.1.

### Beispiele B: Polyurethan-Dispersionen mit verringerter Hydrophilie

### Beispiel B.1: Lösemittelfreie Polyurethan-Basis-Dispersion auf Basis des hvdrophobierten Polyalkylenoxides aus Beispiel A.1

In einem Vierhalskolben ausgerüstet mit KPG-Rührer, Rückflusskühler, Thermometer und Stickstoff-Deckung wurde ein Gemisch aus 100,00 g des hydrophobierten Polypropylenglykols aus Beispiel A.1 mit einer Hydroxyl-Zahl von 53,1 mg KOHg⁻¹ (Fa. Tego Chemie Service GmbH) und 35,62 g Isophorondiisocyanat (Vestanat IPDI, Fa. Creanova Spezialchemie GmbH) unter Stickstoff-Deckung 2 h bei 80 - 90 °C in Gegenwart von 0.1 g Dibutylzinndilaureat (DBTL) als Katalysator gerührt. Nach Zugabe von 4,40 g fein gemahlener Dimethylolpropionsäure (DMPA) zu dem Preaddukt wurde die Mischung unter Stickstoff-Deckung bei 80 - 90 °C weiter gerührt, bis der berechnete NCO-Gehalt erreicht wurde (Theorie: 4,81 Gew.-%). Der Verlauf der Reaktion wurde acidimetrisch verfolgt.

Nach dem Abkühlen auf 60 °C wurde das Prepolymer mit 2,99 g an Triethylamin (TEA) direkt neutralisiert. Das Prepolymer wurde dann unter intensivem Rühren in 146,86 g Wasser dispergiert und anschließend zum Aufbau der Polyurethan-Dispersion mit 3,85 g an Ethylendiamin (EDA) kettenverlängert.

Es wurde eine stabile Polyurethan-Dispersion mit folgender Charakteristik erhalten:

| Charakteristik | milchig-weiße Flüssigkeit |
|---|---|
| Festkörper-Gehalt | 50 Gew.-% |
| Ladungsdichte | 20,12 meq•(100 g)⁻¹ |

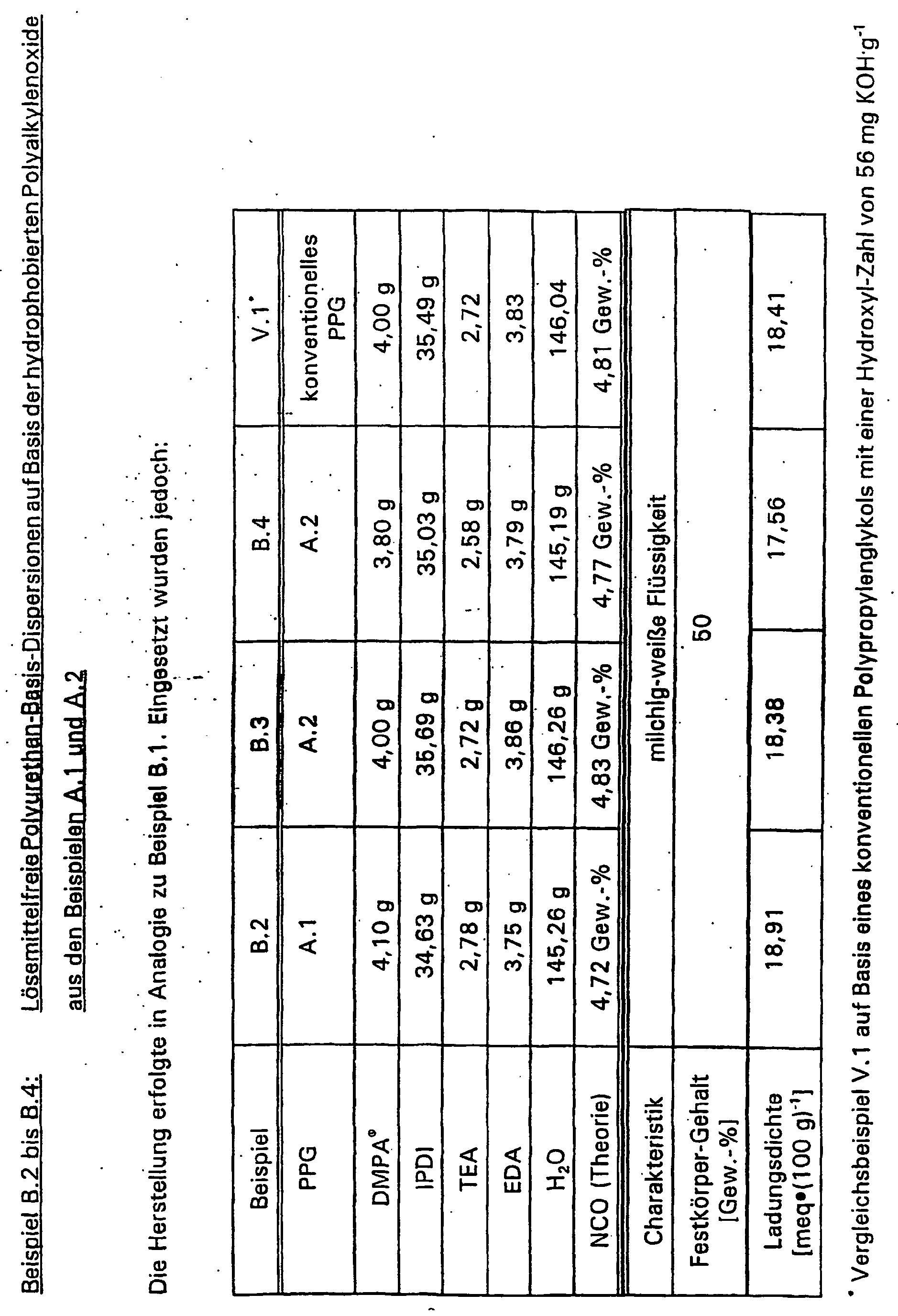

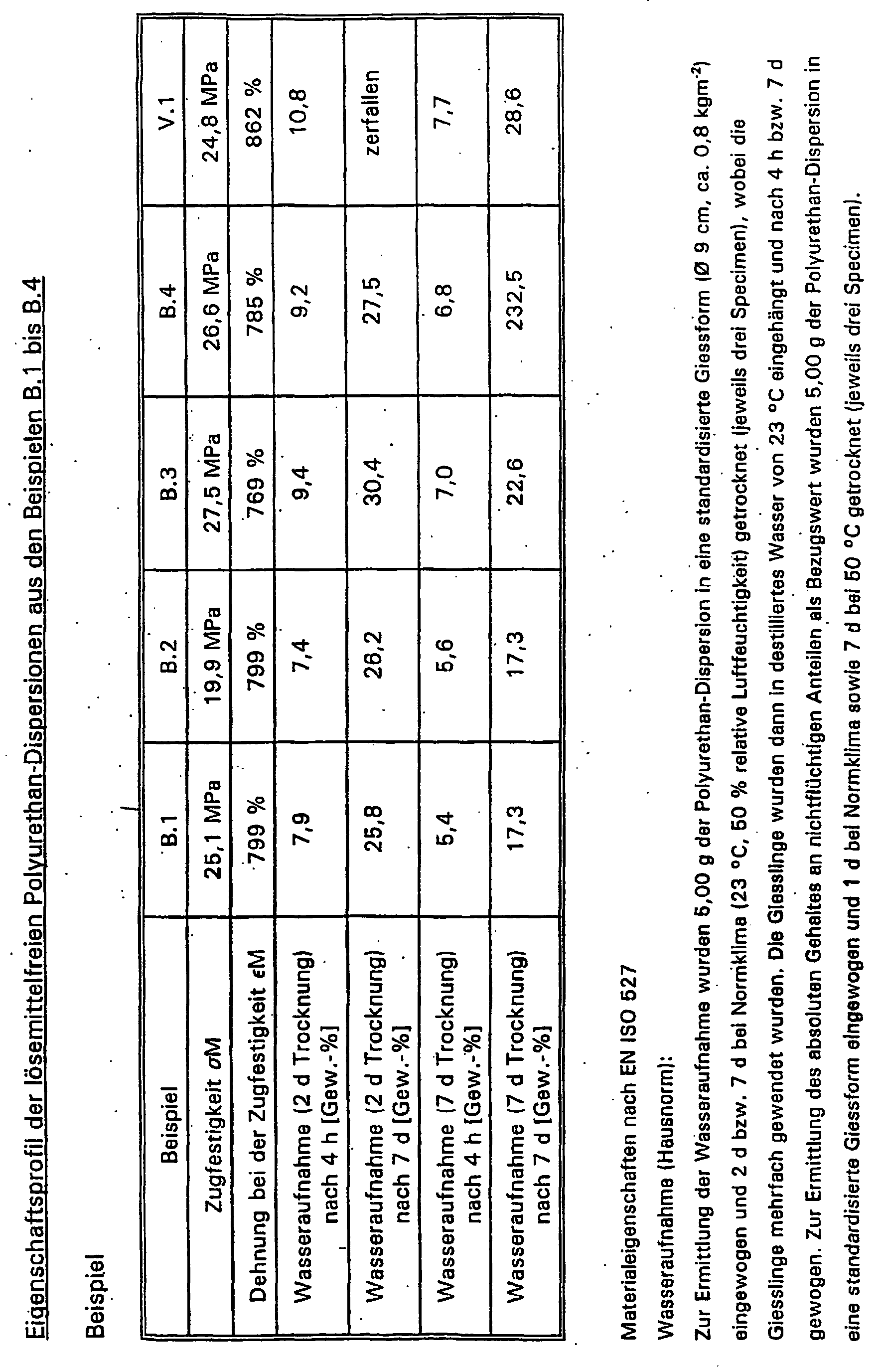

### Beispiel B.5: Lösemittelfreie Polyurethan-Basis-Dispersion auf Basis des hydrophobierten Polyalkylenoxides aus Beispiel A.3

Die Herstellung erfolgte in Analogie zu den Beispielen B.1 bis B.4.

### Beispiel B.6: Lösemittelfreie Polyurethan-Basis-Dispersion auf Basis des hydrophobierten Polyalkylenoxides aus Beispiel A.4

Die Herstellung erfolgte in Analogie zu den Beispielen B.1 bis B.4.

### Beispiel B.7: Lösemittelfreie Polyurethan-Basis-Dispersion auf Basis des hydrophobierten Polyalkylenoxides aus Beispiel A.5

Die Herstellung erfolgte in Analogie zu den Beispielen B.1 bis B.4.

### Beispiel B.8: Lösemittelfreie Polyurethan-Basis-Dispersion auf Basis des hydrophobierten Polyalkylenoxides aus Beispiel A.6

Die Herstellung erfolgte in Analogie zu den Beispielen B.1 bis B.4.

### Beispiel B.9: Lösemittelfreie Polyurethan-Basis-Dispersion auf Basis des hydrophobierten Polyalkylenoxides aus Beispiel A.7

Die Herstellung erfolgte in Analogie zu den Beispielen B.1 bis B.4.

Die lösemittelfreien Polyurethan-Dispersionen aus den Beispielen B.1 bis B.9 weisen geringere Wasseraufnahmen auf als das Vergleichsbeispiel V.1.

### Beispiele C: Polyurethan-Polymer-Hybrid-Dispersionen mit verringerter Hydrophilie

### Beispiel C.1: Lösemittelfreie Polyurethan-Polymer-Hybrid-Dispersion auf Basis des PPGs aus Beispiel A.

In einem Doppelmantelgefäß ausgerüstet mit Thermostat, Rührwerk, Rückflusskühler und Innenthermometer wurden 290,52 g der lösemittelfreien Polyurethan-Basis-Dispersion aus Beispiel B.2 vorgelegt und mit 150,64 g Wasser verdünnt. In einem separaten Gefäß wurde ein Gemisch aus 67,25 g n-Butylacrylat, 28,82 g Methylmethacrylat und 0,77 g 2,2'-Azoisobutyronitril hergestellt und mit Hilfe einer Dosierpumpe während 1 h der verdünnten Polyurethan-Basis-Dispersion hinzugefügt. Das Reaktionsgemisch wurde dann langsam auf 50 bis 60 °C aufgeheizt, nach dem Anspringen der Polymerisations-Reaktion wurden weitere 5 h bei 80 bis 90 °C gerührt.

Es wurde eine stabile Polyurethan-Polymer-Hybrid-Dispersion mit folgender. Charakteristik erhalten:

| Charakteristik | milchig-weiße Flüssigkeit |
|---|---|
| Festkörper-Gehalt | ca. 45 Gew.-% |
| Ladungsdichte | 11,35 meq•(100 g)⁻¹ |

### Vergleichsbeispiel V.2: Lösemittelfreie Polyurethan-Polymer-Hybrid-Dispersion auf Basis eines konventionellen PPGs

Die Herstellung erfolgte in Analogie zu Beispiel C.1.

Eingesetzt wurden 292,08 g der lösemittelfreien Polyurethan-Basis-Dispersion aus Beispiel V.1, 151,45 g Wasser, 67,61 g n-Butylacrylat, 28,98 g Methylmethacrylat und 0,77 g 2,2'-Azoisobutyronitril. Es wurde eine stabile Polyurethan-Polymer-Hybrid-Dispersion mit folgender Charakteristik erhalten:

| Charakteristik | milchig-weiße Flüssigkeit |
|---|---|
| Festkörper-Gehalt | ca. 45 Gew.-% |
| Ladungsdichte | 11,04 meq•(100 g)⁻¹ |

### Eigenschaftsprofil der lösemittelfreien Polyurethan-Polymer-Hybrid-Dispersion aus Beispiel C.1

| Beispiel | C.1 | V.2 |
|---|---|---|
| Zugfestigkeit _{M} | 9,5 MPa | 10,0 MPa |
| Dehnung bei der Zugfestigkeit _{M} | 795 % | 804 % |
| Wasseraufnahme (2 d Trocknung) nach 4 h [Gew.-%] | 4,8 | 7,8 |
| Wasseraufnahme (2 d Trocknung) nach 7 d [Gew.-%] | 22,9 | 27,3 |
| Wasseraufnahme (7 d Trocknung) nach 4 h [Gew.-%] | 4,8 | 7,0 |
| Wasseraufnahme (7 d Trocknung) nach 7 d [Gew.-%] | 16,33 | 21,0 |

Materialeigenschaften nach EN ISO 527
Wasseraufnahme (Hausnorm):
Zur Ermittlung der Wasseraufnahme wurden 5,00 g der Polyurethan-Polymer-Hybrid-Dispersion in eine standardisierte Giessform (Ø 9 cm, ca. 0,8 kgm⁻²) eingewogen und 2 d bzw. 7 d bei Normklima (23 °C, 50 % relative Luftfeuchtigkeit) getrocknet (jeweils drei Specimen), wobei die Giesslinge mehrfach gewendet wurden. Die Giesslinge wurden dann in destilliertes Wasser von 23 °C eingehängt und nach 4 h bzw. 7 d gewogen. Zur Ermittlung des absoluten Gehaltes an nichtflüchtigen Anteilen als Bezugswert wurden 5,00 g der Polyurethan-Polymer-Hybrid-Dispersion in eine standardisierte Giessform eingewogen und 1 d bei Normklima sowie 7 d bei 50 °C getrocknet (jeweils drei Specimen).

Die lösemittelfreie Polyurethan-Polymer-Hybrid-Dispersion aus Beispiel C.1 weist eine geringere Wasseraufnahmen auf als das Vergleichsbeispiel V.2.

## Patentansprüche

1. Polyurethan- oder Polyurethan-Polymer-Hybrid-Dispersion mit geringer Hydrophilie, welche **dadurch** erhältlich ist, dass man
a) 50 bis 100 Gew.-Teile eines hydrophob modifizierten Blockcopolymers (A)(i) mit zwei oder mehreren Hydroxyl-Gruppen und einer Molekularmasse von 500 bis 6 000 Dalton, umfassend 10 bis 90 Gew.-% eines Polymers mit hydrophobierenden Eigenschaften und 90 bis 10 Gew.-% eines Polypropylenoxid-Polymers,
und/oder
50 bis 100 Gew.-Teile eines hydrophoben Blockcopolymers (A)(ii) mit zwei oder mehreren Hydroxyl-Gruppen und einer Molekularmasse von 500 bis 6 000 Dalton, umfassend zwei oder mehrere hydrophobe Alkylenoxide,
und/oder
50 bis 100 Gew.-Teile eines hydrophob modifizierten statistischen Copolymers (A)(iii) mit zwei oder mehreren Hydroxyl-Gruppen und einer Molekularmasse von 500 bis 6 000 Dalton, umfassend 10 bis 90 Gew.-% eines hydrophoben Alkylenoxides in Kombination mit geeigneten Starter-Molekülen und 90 bis 10 Gew.-% Propylenoxid,
wobei die Komponenten (A)(i), (A)(ii) und (A)(iii) kein polymeres Ethylenoxid enthalten,
b) 14 bis 140 Gew.-Teile einer Polyol-Komponente (B), enthaltend
b₁) 2 bis 20 Gew.-Teile einer niedermolekularen und anionogenen Polyol-Komponente (B)(i) mit zwei oder mehreren Hydroxyl-Gruppen und einer oder mehreren gegenüber Polyisocyanaten inerten Carbonsäure- und/oder Sulfonsäure-Gruppe(n) und einer Molekularmasse von 100 bis 1 000 Dalton,
b₂) gegebenenfalls 2 bis 20 Gew.-Teile einer niedermolekularen Polyol-Komponente (B) (ii) mit zwei oder mehreren Hydroxyl-Gruppen und einer Molekularmasse von 50 bis 499 Dalton,
b₃) gegebenenfalls 10 bis 100 Gew.-Teile eines weiteren polymeren Polyols (B)(iii) mit zwei oder mehreren Hydroxyl-Gruppen und einer Molekularmasse von 500 bis 6 000 Dalton,
c) 25 bis 250 Gew.-Teile einer Polyisocyanat-Komponente (C), umfassend mindestens ein Polyisocyanat, Polyisocyanat-Derivat oder Polyisocyanat-Homologes mit zwei oder mehreren aliphatischen und/oder aromatischen Isocyanat-Gruppen,
d) 2 bis 20 Gew.- Teile einer Neutralisations-Komponente (D),
e) 3 bis 30 Gew.-Teile einer Kettenverlängerungs-Komponente (E) sowie
f) 100 bis 5 000 Gew.-Teile Wasser
zu einer lösemittelfreien oder lösemittelarmen Polyurethan-Dispersion umsetzt und gegebenenfalls anschließend mit
g) 117,5 bis 3 200 Gew.-Teilen einer Monomer-Komponente (F), umfassend mindestens ein Monomer mit einer oder mehreren radikalisch polymerisierbaren Doppelbindungen und
h) 0,5 bis 50 Gew.-Teilen einer Initiator-Komponente (G), umfassend mindestens einen lipophilen Radikal-Initiator mit einer oder mehreren thermisch labilen Azo- oder Peroxo-Gruppen
zu einer lösemittelfreien oder lösemittelarmen Polyurethan-Polymer-Hybrid-Dispersion weiterreagieren lässt.

2. Polyurethan-(Polymer-Hybrid-)Dispersion nach Anspruch 1,
**dadurch gekennzeichnet,**
**dass** es sich bei der Komponente (A)(i) um verseifungsstabile Blockcopolymere mit ABA-, BAB- oder (AB)ₙ-Struktur handelt, wobei A ein Polymer-Segment mit hydrophobierenden Eigenschaften und B ein Polymer-Segment auf Basis Polypropylenoxid repräsentiert.

3. Polyurethan-(Polymer-Hybrid-)Dispersion nach einem der Ansprüche 1 bis 2,
**dadurch gekennzeichnet,**
**dass** es sich bei der Komponente (A)(ii) um verseifungsstabile Blockcopolymere mit A₁A₂A₃- oder (A₁A₂)ₙ-Struktur handelt, wobei A₁, A₂ und A₃ jeweils Polymer-Segmente mit hydrophobierenden Eigenschaften repräsentieren.

4. Polyurethan-(Polymer-Hybrid-)Dispersion nach Anspruch 2 oder 3,
**dadurch gekennzeichnet,**
**dass** die Polymer-Segmente A, A₁, A₂ und A₃ aus Polybutylenoxid, Polydodecyloxid, Polyisoamyloxid, Polyoxetan, substituiertem Polyoxetan, Poly-α-pinenoxid, Polystyroloxid,Polytetramethylenoxid, weiteren aliphatischen oder aromatischen Polyoxyalkylenen mit 4 bis 30 Kohlenstoffatomen pro Alkylenoxid, α,ω-Polymethacrylatdiolen, α,ω-Dihydroxyalkylpolydimethyl-siloxanen, Makromonomeren, Telechelen oder Gemischen daraus besteht.

5. Polyurethan-(Polymer-Hybrid-)Dispersion nach einem der Ansprüche 1 bis 4,
**dadurch gekennzeichnet,**
**dass** als hydrophob modifiziertes Blockcopolymer (A)(i) Poly-(propylenoxid)-*block*-poly-(butylenoxid)-*block*-poly-(propylenoxid) und/oder Poly-(propylenoxid)-*block*-poly-(styroloxid)-*block*-poly-(propylenoxid) und/oder- Poly-(propylenoxid)-*block*-poly-(tetramethylenoxid)-*block*-poly-(propylenoxid) und/oder Poly-(butylenoxid)-*block*-poly-(propylenoxid)-*block*-poly-(butylenoxid) und/oder Poly-(styroloxid)-*block*-poly-(propylenoxid)-*block*-poly-(styroloxid) und als hydrophobes Blockcopolymer (A)(ii) aus Poly-(butylenoxid)-*block*-poly-(tetramethylenoxid)-*block*-poly-(butylenoxid), zusammengesetzt aus 10 bis 90 Gew.-% Polybutylenoxid und/oder Polystyroloxid und/oder Polytetramethylenoxid und 90 bis 10 Gew.-% Polypropylenoxid, mit einer Molekularmasse von 1 000 bis 3 000 Dalton eingesetzt wird.

6. Polyurethan-(Polymer-Hybrid-)Dispersion nach einem der Ansprüche 1 bis 5,
**dadurch gekennzeichnet,**
**dass** es sich bei der Komponente (A)(iii) um verseifungsstabile statistische Copolymere aus mindestens einem hydrophoben Alkylenoxid und Propylenoxid handelt.

7. Polyurethan-(Polymer-Hybrid-)Dispersion nach Anspruch 6,
**dadurch gekennzeichnet,**
**dass** das hydrophobe Alkylenoxid aus Butylenoxid, Dodecyloxid, Isoamyloxid, Oxetan, substituiertem Oxetan, α-Pinenoxid; Styroloxid, weiteren aliphatischen oder aromatischen Polyoxyalkylenen mit 4 bis 30 Kohlenstoffatomen pro Alkylenoxid oder Gemischen daraus ausgewählt ist.

8. Polyurethan-(Polymer-Hybrid-)Dispersion nach einem der Ansprüche 1 bis 7,
**dadurch gekennzeichnet,**
**dass** das als hydrophob modifizierte statistische Copolymer (A)(iii) Poly-(butylenoxid)-*co*-poly-(propylenoxid) und/oder Poly-(dodecyloxid)-*co*-poly-(propylenoxid)und/oderPoly-(isoamyloxid)-*co-*poly-(propylenoxid) und/oder Poly-(α-pinenoxid)-*co*-poly-(propylenoxid) und/oder Poly-(styroloxid)-*co*-poly-(propylenoxid), zusammengesetzt aus 10 bis 90 Gew.-% Butylenoxid und/oder Dodecyloxid und/oder Isoamyloxid und/oder α-Pinenoxid und/oder Styroloxid und 90 bis 10 Gew.-% Propylenoxid, mit einer Molekularmasse von 1 000 bis 3 000 Dalton eingesetzt wird.

9. Polyurethan-(Polymer-Hybrid-)Dispersion nach einem der Ansprüche 1 bis 8,
**dadurch gekennzeichnet,**
**dass** die Komponenten (A)(i), (A)(ii) und (A)(iii) Polymersegmente auf Basis von Polyalkylenoxiden aufweisen, die Bisphenol-A und/oder andere hydrophobe Starter-Moleküle enthalten.

10. Polyurethan-(Polymer-Hybrid-)Dispersion nach einem der Ansprüche 1 bis 9,
**dadurch gekennzeichnet,**
**dass** es sich bei der Komponente (B)(i) um eine Bishydroxyalkancarbonsäure handelt.

11. Polyurethan-(Polymer-Hybrid-)Dispersion nach Anspruch 10,
**dadurch gekennzeichnet,**
**dass** die Bishydroxyalkancarbonsäure Dimethylolpropionsäure ist.

12. Polyurethan-(Polymer-Hybrid-)Dispersion nach einem der Ansprüche 1 bis 11,
**dadurch gekennzeichnet,**
**dass** es sich bei der Komponente (B)(iii) um polymere Polyole wie Polyalkylenglykole, aliphatische oder aromatische Polyester, Polycaprolactone, Polycarbonate, α,ω-Polymethacrylatdiole, α,ω-Dihydroxyalkylpolydimethylsiloxane, Makromonomere, Telechele, hydroxyfunktionelle Epoxid-Harze oder Gemische daraus handelt.

13. Polyurethan-(Polymer-Hybrid-)Dispersion nach einem der Ansprüche 1 bis 12,
**dadurch gekennzeichnet,**
**dass** das NCO/OH-Equivalent-Verhältnis der Komponenten (A), (B) und (C) auf einen Wert von 1,25 bis 2,5, vorzugsweise 1,4 bis 2,0 eingestellt ist.

14. Polyurethan-(Polymer-Hybrid-)Dispersion nach einem der Ansprüche 1 bis 13,
**dadurch gekennzeichnet,**
**dass** die Neutralisations-Komponente (D) in einer solchen Menge vorliegt, dass der Neutralisations-Grad bezogen auf die freien Carbonsäure- und/oder Sulfonsäure-Gruppen des Polyurethan-Prepolymers bei 70 bis 100 Equivalent-%, vorzugsweise 90 bis 100 Equivalent-%, liegt.

15. Polyurethan-(Polymer-Hybrid-)Dispersion nach einem der Ansprüche 1 bis 14,
**dadurch gekennzeichnet,**
**dass** die Kettenverlängerungs-Komponente (E) in einer solchen Menge vorliegt, dass der Kettenverlärigerungs-Grad bezogen auf die freien Isocyanat-Gruppen des Polyurethan-Prepolymers bei 50 bis 100 Equivalent-%, vorzugsweise bei 70 bis 80 Equivalent-%, liegt:

16. Polyurethan-(Polymer-Hybrid-)Dispersion nach einem der Ansprüche 1 bis 15,
**dadurch gekennzeichnet,**
**dass** es sich bei der Komponente (F) um Acrylsäure und deren Derivate und/oder Methacrylsäure und deren Derivate und/oder Styrol und dessen Derivate handelt.

17. Polyurethan-(Polymer-Hybrid-)Dispersion nach einem der Ansprüche 1 bis 16,
**dadurch gekennzeichnet,**
**dass** die Komponente (G) ein Radikal-Initiator ist, der bei einer Zerfallstemperatur im Bereich von 40 bis 120 °C eine Halbwertszeit von 1 Stunde aufweist.

18. Polyurethan-(Polymer-Hybrid-)Dispersion nach Anspruch 17,
**dadurch gekennzeichnet,**
**dass** die Komponente (G) 2,2'-Azobisisobutyronitril ist.

19. Polyurethan-(Polymer-Hybrid-)Dispersion nach einem der Ansprüche 1 bis 18,
**dadurch gekennzeichnet,**
**dass** das Initiator/Monomer-Molverhältnis der Komponenten (F) und (G) in einem Bereich von 0,001 bis 0,05 eingestellt ist.

20. Polyurethan-(Polymer-Hybrid-)Dispersion nach einem der Ansprüche 1 bis 19,
**dadurch gekennzeichnet,**
**dass** im Polyurethan-Polymer aus den Komponenten (A) bis (E) der Gehalt an Carboxylat- und/oder Sulfonat-Gruppen auf 10 bis 50 meq•(100 g)⁻¹, vorzugsweise auf 15 bis 45 meq•(100 g)⁻¹, und die Säurezahl auf 5 bis 30 meq KOH·g⁻¹, vorzugsweise auf 10 bis 25 meq KOH·g⁻¹, eingestellt ist.

21. Polyurethan-(Polymer-Hybrid-)Dispersion nach einem der Ansprüche 1 bis 20,
**dadurch gekennzeichnet,**
**dass** im Polyurethan-Hybrid-Polymer aus den Komponenten (A) bis (G) der Gehalt an Carboxylat- und/oder Sulfonat-Gruppen auf 5 bis 25 meq•(100 g)⁻¹, vorzugsweise auf 10 bis 20 meq•(100 g)⁻¹, und die Säurezahl auf 2,5 bis 15 meq KOH·g⁻¹, vorzugsweise auf 5 bis 12,5 meq KOH·g⁻¹, eingestellt ist.

22. Polyurethan-(Polymer-Hybrid-)Dispersion nach einem der Ansprüche 1 bis 21,
**dadurch gekennzeichnet,**
**dass** der Festkörper-Gehalt an Polyurethan-Polymer bestehend aus den Komponenten (A) bis (E) auf 30 bis 70 Gew.-%, vorzugsweise 40 bis 60 Gew.-%, bezogen auf die Gesamtmenge der Polyurethan-Dispersion eingestellt ist.

23. Polyurethan-(Polymer-Hybrid-)Dispersion nach einem der Ansprüche 1 bis 22,
**dadurch gekennzeichnet,**
**dass** der Festkörper-Gehalt an Polyurethan-Hybrid-Polymer bestehend aus den Komponenten (A) bis (G), auf 30 bis 70 Gew.-%, vorzugsweise auf 40 bis 60 Gew.-%, bezogen auf die Gesamtmenge der Polyurethan-Polymer-Hybrid-Dispersion eingestellt ist.

24. Polyurethan-(Polymer-Hybrid-)Dispersion nach einem der Ansprüche 1 bis 23,
**dadurch gekennzeichnet,**
**dass** das Verhältnis der anteiligen Festkörper-Gehalte aus Polyurethan-Harz aus den Komponenten (A) bis (E) und Polymer-Harz aus den Komponenten (F) und (G) auf 20 zu 80 bis 80 zu 20 Gew.-%, vorzugsweise auf 40 zu 60 bis 60 zu 40 Gew.-%, eingestellt ist.

25. Polyurethan-(Polymer-Hybrid-)Dispersion nach einem der Ansprüche 1 bis 24,
**dadurch gekennzeichnet,**
**dass** die Polyurethan-Dispersionen oder Polyurethan-Polymer-Hybrid-Dispersionen weniger als 10 Gew.-% an organischen Lösemitteln enthalten.

26. Polyurethan-(Polymer-Hybrid-)Dispersion nach einem der Ansprüche 1 bis 25,
**dadurch gekennzeichnet,**
**dass** die mittlere Partikelgröße der Micellen 50 bis .500 nm, vorzugsweise 100 bis 400 nm, beträgt.

27. Polyurethan-(Polymer-Hybrid-)Dispersion nach einem der Ansprüche 1 bis 26,
**dadurch gekennzeichnet,**
**dass** die mittlere Molmasse (Zahlenmittel) 50 000 bis 500 000 Dalton beträgt.

28. Polyurethan-(Polymer-Hybrid-)Dispersion nach einem der Ansprüche 1 bis 27,
**dadurch gekennzeichnet,**
**dass** die reinen Bindemittel aus den Komponenten (A) bis (E) oder (A) bis (G) bei einer Auftragsmenge von 0,8 kg m⁻² nach 7 d Trocknung bei 23 °C und 50 % relativer Luftfeuchtigkeit sowie 7 d Wasserlagerung bei 23 °C eine Wasseraufnahme von 0,25 bis 25 Gew-% an destilliertem Wasser zeigen.

29. Verfahren zur Herstellung einer Polyurethan- oder Polyurethan-Polymer-Hybrid-Dispersion mit verringerter Hydrophilie nach einem der Ansprüche 1 bis 28,
**dadurch gekennzeichnet,**
**dass** eine lösemittelfreie oder lösemittelarme Polyurethan-Dispersion hergestellt wird, indem man
a₁) die Komponenten (A), (B)(ii), (B)(iii) und (C) gegebenenfalls in Gegenwart eines Katalysators zu einem Polyurethan-Preaddukt umsetzt
und/oder
einen Premix aus den Komponenten (A) und (B) herstellt,
a₂) das Preaddukt aus Stufe a₁) mit der Komponente (B)(i)
- und/oder
den Premix aus Stufe a₁) mit der Komponente (C) gegebenenfalls stufenweise zu einem Polyurethan-Prepolymer umsetzt,
a₃) das Polyurethan-Prepolymer aus Stufe a₂) dann vor und/oder während der Dispergierung in Wasser mit der Komponente (D) neutralisiert,
a₄) das neutralisierte und dispergierte Polyurethan-Prepolymer aus Stufe a₃) anschließend mit der Komponente (E) kettenverlängert,
sowie gegebenenfalls anschließend eine lösemittelfreie oder lösemittelarme Polyurethan-Polymer-Hybrid-Dispersion herstellt, indem man
b₁) die Polyurethan-Dispersion aus Stufe a₄) gegebenenfalls mit Wasser verdünnt und dann mit einem vorgefertigten Gemisch der Komponenten (F) und (G) versetzt und schliesslich
b₂) durch den thermischen Zerfall der Komponente (G) eine radikalische Polymerisation der Komponente (F) durchführt.

30. Verfahren nach Anspruch 29,
**dadurch gekennzeichnet,**
**dass** die Reaktionsstufen a₁) und a₂) bei einer Temperatur von 60 bis 120 °C, vorzugsweise von 80 bis 100 °C, durchgeführt werden.

31. Verfahren nach Anspruch 29 oder 30,
**dadurch gekennzeichnet,**
**dass** die Reaktionsstufe a3) bei einer Temperatur von 40 bis 60 °C durchgeführt wird.

32. Verfahren nach einem der Ansprüche 29 bis 31,
**dadurch gekennzeichnet,**
**dass** die Reaktionsstufe a₄) bei 30 bis 50 °C durchgeführt wird.

33. Verfahren nach einem der Ansprüche 29 bis 32,
**dadurch gekennzeichnet,**
**dass** die Reaktionsstufe b₁) bei einer Temperatur von 15 bis 35 °C, vorzugsweise bei 20 bis 30 °C, durchgeführt wird.

34. Verfahren nach einem der Ansprüche 29 bis 33,
**dadurch gekennzeichnet,**
**dass** die Reaktionsstufe b₂) bei einer Temperaturdifferenz von ±10 °C bezogen auf die Temperatur, bei der die Komponente (G) eine Halbwertszeit von 1 Stunde aufweist, durchgeführt wird.

35. Verfahren nach einem der Ansprüche 29 bis 34,
**dadurch gekennzeichnet,**
**dass** die Reaktionsstufe b₂) bei einer Temperatur von 80±10 °C bei Verwendung von 2,2'-Azobisisobutyronitril als Komponente (G) durchgeführt wird.

36. Verfahren nach einem der Ansprüche 29 bis 35,
**dadurch gekennzeichnet,**
**dass** im Anschluss an die Reaktionsstufe a₄) eventuell noch vorhandene freie NCO-Gruppen mit Wasser vollständig kettenverlängert werden.

37. Verfahren nach einem der Ansprüche 1 bis 36,
**dadurch gekennzeichnet,**
**dass** die radikalische Polymerisation in der Reaktionsstufe b₂) ohne weitere Emulgatoren durchgeführt wird.

38. Verwendung der Polyurethan-(Polymer-Hybrid-)Dispersion nach einem der Ansprüche 1 bis 28,
**dadurch gekennzeichnet,**
**dass** sie in ein- oder zweikomponentiger Form eingesetzt wird.

39. Verwendung nach Anspruch 38,
**dadurch gekennzeichnet,**
**dass** bei zweikomponentiger Applikation formulierte oder unformulierte Polyurethan-(Polymer-Hybrid-)Dispersion als Bindemittel-Komponente und wasseremulgierbare Polyisocyanate als Härter-Komponente eingesetzt werden.

40. Verwendung der Polyurethan-(Polymer-Hybrid-)Dispersion nach einem der Ansprüche 1 bis 28 als Bindemittel in Formulierungen für Sportbodenbeläge und Tennisplatzbeläge in Form von
(a) Bindemitteln für Elastikschichten, umfassend Gummigranulate oder Fasern sowie gegebenenfalls Zuschlagstoffe,
(b) Haftvermittlern oder Grundierungen für die Untergründe von Sportbodenbelägen,
(c) Spritzbeschichtungen, gegebenenfalls mit Struktur-Füllstoffen, zur Aufbringung auf elastische oder starre Untergründe,
(d) Verlaufsbeschichtungen zur Aufbringung auf elastische oder starre Untergründe,
(e) Spachtelmassen für den Porenverschluss von elastischen oder starren Untergründen,
(f) Klebstoffen zur Verklebung von vorgefertigten Elastikschichten,
(g) Versiegelungen, gegebenenfalls mit Pigmenten, sowie
(h) Linierungsfarben.

41. Verwendung der Polyurethan- oder Polyurethan-Polymer-Hybrid-Dispersion nach einem der Ansprüche 1 bis 28 als Bindemittel in Formulierungen für rissüberbrückende Beschichtungssysteme in Form von
a) Grund-, Schwimm- oder Deckschichten, sowie Spritzbeschichtungen oder Versiegelungen auf vorzugsweise grundierten Bauwerksoberflächen,
b) gegebenenfalls flammgeschützten Dach-Beschichtungen oder -Anstrichen, sowie
c) gegebenenfalls flammgeschützten Abdichtungen von Bauwerken im Tage- oder Untertagebau.

42. Verwendung der Polyurethan- oder Polyurethan-Polymer-Hybrid-Dispersion nach einem der Ansprüche 1 bis 28 als Bindemittel für Beschichtungen, Dichtstoffe, Druckfarben, Farben und Lacke, Grundierungen, Klebstoffe, Membranen für die Oberflächen von mineralischen Baustoffen, wie z.B. Beton, Gips, Keramik, Ton, Zement, sowie für die Oberflächen von Glas, Gummi, Holz und Holzwerkstoffen, Kunststoff, Metall, Papier, Verbundwerkstoffen.

43. Verwendung der Polyurethan- oder Polyurethan-Polymer-Hybrid-Dispersion nach einem der Ansprüche 1 bis 28 als Bindemittel für die Vergütung von hydraulischen Bindemitteln.

44. Verwendung der Polyurethan- oder Polyurethan-Polymer-Hybrid-Dispersion nach einem der Ansprüche 1 bis 28 als Bindemittel für die Beschichtung von echten und synthetischen Ledern sowie Papier und Kartonagen und für die Herstellung von synthetischen Ledern.

## Claims

1. Polyurethane or polyurethane polymer hybrid dispersion with a low hydrophilicity which is obtainable by reacting
a) 50 to 100 parts by weight of a hydrophobically-modified block copolymer (A)(i) having two or more hydroxyl groups and a molecular mass of 500 to 6,000 Daltons, comprising 10 to 90 % by weight of a polymer having hydrophobizing properties and 90 to 10 % by weight of a polypropylene oxide polymer,
and/or
50 to 100 parts by weight of a hydrophobic block copolymer (A)(ii) having two or more hydroxyl groups and a molecular mass of 500 to 6,000 Daltons, comprising two or more hydrophobic alkylene oxides,
and/or
50 to 100 parts by weight of a hydrophobically-modified random copolymer (A)(iii) having two or more hydroxyl groups and a molecular mass of 500 to 6,000 Daltons, comprising 10 to 90 % by weight of a hydrophobic alkylene oxide in combination with suitable initiator molecules and 90 to 10 % by weight of propylene oxide,
where the components (A)(i), (A)(ii) and (A)(iii) do not contain polymeric ethylene oxide
b) 14 to 140 parts by weight of a polyol component (B), containing
b₁) 2 to 20 parts by weight of a low molecular weight and anionogenic polyol component (B)(i) having two or more hydroxyl groups and one or more carboxyl and/or sulphonic acid group(s) that are inert to polyisocyanates and a molecular mass of 100 to 1,000 Daltons,
b₂) optionally 2 to 20 parts by weight of a low molecular weight polyol component (B)(ii) having two or more hydroxyl groups and a molecular mass of 50 to 499 Daltons,
b₃) optionally 10 to 100 parts by weight of a further polymeric polyol (B)(iii) having two or more hydroxyl groups and a molecular mass of 500 to 6,000 Daltons,
c) 25 to 250 parts by weight of a polyisocyanate component (C) comprising at least one polyisocyanate, polyisocyanate derivative or polyisocyanate homologue having two or more aliphatic and/or aromatic isocyanate groups,
d) 2 to 20 parts by weight of a neutralizing component (D),
e) 3 to 30 parts by weight of a chain-extension component (E) and
f) 100 to 5,000 parts by weight of water
to form a solvent-free or low-solvent polyurethane dispersion and, optionally, then allowing said dispersion to react further with
g) 117.5 to 3,200 parts by weight of a monomer component (F) comprising at least one monomer having one or more double bonds capable of free radical polymerization and
h) 0.5 to 50 parts by weight of an initiator component (G) comprising at least one lipophilic free radical initiator having one or more thermally labile azo or peroxo groups
to form a solvent-free or low-solvent polyurethane polymer hybrid dispersion.

2. Polyurethane (polymer hybrid) dispersion as claimed in claim 1,
**characterized in that**
the component (A)(i) is a saponification-resistant block copolymer having an ABA, BAB or (AB)ₙ structure, where A represents a polymer segment with hydrophobizing properties and B represents a polymer segment based on polypropylene oxide.

3. Polyurethane (polymer hybrid) dispersion as claimed in one of the claims 1 to 2,
**characterized in that**
the component (A)(ii) is a saponification-resistant block copolymer having an A₁A₂A₃ or (A₁A₂)ₙ structure A₁A₂ and A₃ each representing polymer segments with hydrophobizing properties.

4. Polyurethane (polymer hybrid) dispersion as claimed in claim 2 or 3,
**characterized in that**
the polymer segments A, A₁, A₂ and A₃ consist of polybutylene oxide, polydodecyl oxide, polyisoamyl oxide, polyoxetane, substituted polyoxetane, poly-α-pinene oxide, polystyrene oxide, polytetramethylene oxide, further aliphatic or aromatic polyoxyalkylenes having 4 to 30 carbon atoms per alkylene oxide, α,ω-polymethacrylatediols, α,α-dihydroxyalkylpolydimethylsiloxanes, macromonomers, telechelic polymers or mixtures thereof.

5. Polyurethane (polymer hybrid) dispersion as claimed in one of the claims 1 to 4,
**characterized in that**
poly(propylene oxide)-*block*-poly(butylene oxide)-*block*-poly(propylene oxide) and/or poly(propylene oxide)-*block*- poly(styrene oxide)-*block-*poly(propylene oxide) and/or poly(propylene oxide)-*block*-poly (tetramethylene oxide)-*block*-poly(propylene oxide) and/or poly(butylene oxide)-*block*-poly(propylene oxide)-*block*-poly(butylene oxide) and/or poly(styrene oxide)-*block*-poly(propylene oxide)-*block*-poly(styrene oxide) is used as the hydrophobically modified block copolymer (A)(i) and poly(butylene oxide)-*block*-poly (tetramethylene oxide)-*block*-poly(butylene oxide) is used as the hydrophobic *block* copolymer (A)(ii) which are composed of 10 to 90% by weight of polybutylene oxide and/or polystyrene oxide and/or polytetramethylene oxide and 90 to 10% by weight of propylene oxide and have a molecular mass of 1,000 to 3,000 Daltons.

6. Polyurethane (polymer hybrid) dispersion as claimed in one of the claims 1 to 5,
**characterized in that**
the component (A)(iii) is a saponification-resistant random copolymer consisting of at least one hydrophobic alkylene oxide and propylene oxide.

7. Polyurethane (polymer hybrid) dispersion as claimed in claim 6,
**characterized in that**
the hydrophobic alkylene oxide is selected from butylene oxide, dodecyl oxide, isoamyl oxide, oxetane, substituted oxetane, α-pinene oxide, styrene oxide, further aliphatic or aromatic polyoxyalkylenes having 4 to 30 carbon atoms per alkylene oxide or mixtures thereof.

8. Polyurethane (polymer hybrid) dispersion as claimed in one of the claims 1 to 7,
**characterized in that**
poly(butylene oxide)-co-poly(propylene oxide) and/or poly(dodecyl oxide)-co-poly(propylene oxide) and/or poly(isoamyl oxide)-co-poly(propylene oxide) and/or poly(α-pinene oxide)-co-poly(propylene oxide) and/or poly(styrene oxide)-co-poly(propylene oxide), composed of 10 to 90% by weight of butylene oxide and/or dodecyl oxide and/or isoamyl oxide and/or α-pinene oxide and/or styrene oxide and 90 to 10% by weight of propylene oxide and having a molecular mass of 1,000 to 3,000 Daltons is used as the hydrophobically modified random copolymer (A)(iii).

9. Polyurethane (polymer hybrid) dispersion as claimed in one of the claims 1 to 8,
**characterized in that**
the components (A)(i), (A)(ii) and (A)(iii) have polymer segments based on polyalkylene oxides which contain bisphenol A and/or other hydrophobic initiator molecules.

10. Polyurethane (polymer hybrid) dispersion as claimed in one of the claims 1 to 9,
**characterized in that**
the component (B)(i) is a bishydroxyalkanecarboxylic acid.

11. Polyurethane (polymer hybrid) dispersion as claimed in claim 10,
**characterized in that**
the bishydroxyalkanecarboxylic acid is dimethylolpropionic acid.

12. Polyurethane (polymer hybrid) dispersion as claimed in one of the claims 1 to 11,
**characterized in that**
the component (B)(iii) is a polymeric polyol, such as polyalkylene glycols, aliphatic or aromatic polyesters, polycaprolactones, polycarbonates, α,ω-polymethacrylatediols, α,ω-dihydroxyalkylpolydimethylsiloxanes, macromonomers or telechelic polymers, hydroxyfunctional epoxy resins or mixtures thereof.

13. Polyurethane (polymer hybrid) dispersion as claimed in one of the claims 1 to 12,
**characterized in that**
the NCO/OH equivalent ratio of the components (A), (B) and (C) is adjusted to a value of 1.25 to 2.5, preferably 1.4 to 2.0.

14. Polyurethane (polymer hybrid) dispersion as claimed in one of the claims 1 to 13,
**characterized in that**
the neutralizing component (D) is present in such an amount that the degree of neutralization, based on the free carboxyl and/or sulphonic acid groups of the polyurethane prepolymer, is 70 to 100 equivalent %, preferably 90 to 100 equivalent %.

15. Polyurethane (polymer hybrid) dispersion as claimed in one of the claims 1 to 14,
**characterized in that**
the chain-extension component (E) is present in such an amount that the degree of chain extension, based on the free isocyanate groups of the polyurethane prepolymer, is 50 to 100 equivalent %, preferably 70 to 80 equivalent %.

16. Polyurethane (polymer hybrid) dispersion as claimed in one of the claims 1 to 15,
**characterized in that**
the component (F) is acrylic acid and derivatives thereof and/or methacrylic acid and derivatives thereof and/or styrene and derivatives thereof.

17. Polyurethane (polymer hybrid) dispersion as claimed in one of the claims 1 to 16,
**characterized in that**
the component (G) is a free radical initiator which has a half-life of 1 hour at a decomposition temperature in the range of 40 to 120° C.

18. Polyurethane (polymer hybrid) dispersion as claimed in claim 17,
**characterized in that**
the component (G) is 2,2'-azobisisobutyronitrile.

19. Polyurethane (polymer hybrid) dispersion as claimed in one of the claims 1 to 18,
**characterized in that**
the molar initiator/monomer ratio of the components (F) and (G) is adjusted in a range of 0.001 to 0.05.

20. Polyurethane (polymer hybrid) dispersion as claimed in one of the claims 1 to 19,
**characterized in that**
in the polyurethane polymer from components (A) to (E), the content of carboxylate and/or sulphonate groups is adjusted to 10 to 50 meq ··(100 g)⁻¹, preferably to 15 to 45 meq·· (100 g)⁻¹, and the acid number is adjusted to 5 to 30 meq KOH·g⁻¹, preferably to 10 to 25 meq KOH·g⁻¹.

21. Polyurethane (polymer hybrid) dispersion as claimed in one of the claims 1 to 20,
**characterized in that**
in the polyurethane hybrid polymer from components (A) to (G), the content of carboxylate and/or sulphonate groups is adjusted to 5 to 25 meq·· (100 g)⁻¹, preferably to 10 to 20 meq·· (100 g)⁻¹, and the acid number is adjusted to 2.5 to 15 meq KOH·g⁻¹, preferably to 5 to 12.5 meq KOH·g⁻¹.

22. Polyurethane (polymer hybrid) dispersion as claimed in one of the claims 1 to 21,
**characterized in that**
the solids content of polyurethane polymer consisting of the components (A) to (E) is adjusted to 30 to 70% by weight, preferably 40 to 60% by weight, based on the total amount of the polyurethane dispersion.

23. Polyurethane (polymer hybrid) dispersion as claimed in one of the claims 1 to 22,
**characterized in that**
the solids content of polyurethane hybrid polymer consisting of the components (A) to (G) is adjusted to 30 to 70 % by weight, preferably to 40 to 60 % by weight, based on the total amount of the polyurethane polymer hybrid dispersion.

24. Polyurethane (polymer hybrid) dispersion as claimed in one of the claims 1 to 23,
**characterized in that**
the ratio of the proportionate solids contents of polyurethane resin comprising the components (A) to (E) and polymer resin comprising the components (F) and (G) is adjusted to 20:80 to 80:20 % by weight, preferably 40:60 to 60:40 % by weight.

25. Polyurethane (polymer hybrid) dispersion as claimed in one of the claims 1 to 24,
**characterized in that**
the polyurethane dispersions or polyurethane polymer hybrid dispersions contain less than 10 % by weight of organic solvents.

26. Polyurethane (polymer hybrid) dispersion as claimed in one of the claims 1 to 25,
**characterized in that**
the average particle size of the micelles is 50 to 500 nm, preferably 100 to 400 nm.

27. Polyurethane (polymer hybrid) dispersion as claimed in one of the claims 1 to 26,
**characterized in that**
the average molar mass (number average) is 50,000 to 500,000 Daltons.

28. Polyurethane (polymer hybrid) dispersion as claimed in one of the claims 1 to 27,
**characterized in that**
the pure binders comprising the components (A) to (E) or (A) to (G) exhibit a water absorption of 0.25 to 25 % by weight of distilled water on application of an amount of 0.8 kg m⁻² after drying for 7 d at 23° C and 50% relative humidity and storage in water at 23° C for 7 d.

29. Method for producing a polyurethane or polyurethane polymer hybrid dispersion with reduced hydrophilicity as claimed in one of the claims 1 to 28,
**characterized in that**
a solvent-free or low-solvent polyurethane dispersion is prepared by
a₁) reacting the components (A), (B)(ii), (B)(iii) and (C) optionally in the presence of a catalyst to form a polyurethane preadduct
and/or
preparing a premix of the components (A) and (B),
a₂) reacting the preadduct from stage a₁) with the component (B)(i)
and/or
the premix from stage a₁) with component (C) optionally stepwise, to form a polyurethane prepolymer,
a₃) then neutralizing the polyurethane prepolymer from stage a₂) with component (D) before and/or during the dispersion in water,
a₄) afterwards extending the chain of the neutralized and dispersed polyurethane prepolymer from stage a₃) with component (E)
and optionally subsequently preparing a solvent-free or low-solvent polyurethane polymer hybrid dispersion by
b₁) optionally diluting the polyurethane dispersion from stage a₄) with water and then adding a prepared mixture of the components (F) and (G) and finally
b₂) carrying out a free radical polymerization of component (F) by the thermal decomposition of component (G).

30. Method as claimed in claim 29,
**characterized in that**
the reaction stages a₁) and a₂) are carried out at a temperature of 60 to 120°C, preferably of 80 to 100°C.

31. Method as claimed in claim 29 or 30,
**characterized in that**
the reaction stage a₃) is carried out at a temperature of 40 to 60°C.

32. Method as claimed in one of the claims 29 to 31,
**characterized in that**
the reaction stage a₄) is carried out at 30 to 50°C.

33. Method as claimed in one of the claims 29 to 32,
**characterized in that**
the reaction stage b₁) is carried out at a temperature of 15 to 35°C, preferably at 20 to 30°C.

34. Method as claimed in one of the claims 29 to 33,
**characterized in that**
the reaction stage b₂) is carried out at a temperature difference of ±10°C, based on the temperature at which the component (G) has a half-life of 1 hour.

35. Method as claimed in one of the claims 29 to 34,
**characterized in that**
the reaction stage b₂) is carried out at a temperature of 80±10°C when using 2,2'-azobisisobutyronitrile as component (G).

36. Method as claimed in one of the claims 29 to 35,
**characterized in that**
any free NCO groups still present are completely chain extended with water after the reaction stage a₄).

37. Method as claimed in one of the claims 29 to 36,
**characterized in that**
the free radical polymerization in the reaction stage b₂) is carried out without additional emulsifiers.

38. Use of the polyurethane (polymer hybrid) dispersion as claimed in one of the claims 1 to 28,
**characterized in that**
it is used in a one-component or two-component form.

39. Use as claimed in claim 38,
**characterized in that**,
in the case of two-component applications, a formulated or unformulated polyurethane (polymer hybrid) dispersion is used as a binder component and water-emulsifiable polyisocyanates are used as a curing component.

40. Use of the polyurethane (polymer hybrid) dispersion as claimed in one of the claims 1 to 28 as a binder in formulations for sports floor coverings and tennis court coverings in the form of
(a) binders for elastic layers comprising rubber granules or fibres and optionally additives,
(b) adhesion agents or primers for the substrates of sports floor coverings,
(c) spray coatings, optionally with structural fillers for application to elastic or rigid substrates,
(d) levelling coatings for application to elastic or rigid substrates,
(e) filling compounds for closing pores of elastic or rigid substrates,
(f) adhesives for the adhesive bonding of prefabricated elastic layers,
(g) seals optionally in pigmented form and
(h) line-painting paints.

41. Use of the polyurethane or polyurethane polymer hybrid dispersion as claimed in one of the claims 1 to 28 as a binder in formulations for crack-bridging coating systems in the form of
a) base, floating or top coats, and spray coatings or seals on preferably primed building surfaces,
b) optionally flame-proof roof coatings or finishes and
c) optionally flame-proof seals of structures in open cast or underground mining.

42. Use of the polyurethane or polyurethane polymer hybrid dispersion as claimed in one of the claims 1 to 28 as a binder for coatings, sealants, printing inks, paints and lacquers, primers, adhesives, membranes for the surfaces of mineral building materials, such as, for example, concrete, gypsum, ceramic, clay or cement, and for the surfaces of glass, rubber, wood and woodbase materials, plastic, metal, paper or composite materials.

43. Use of the polyurethane or polyurethane polymer hybrid dispersion as claimed in one of the claims 1 to 28 as a binder for the treatment of hydraulic binders.

44. Use of the polyurethane or polyurethane polymer hybrid dispersion as claimed in one of the claims 1 to 28 as a binder for coating natural and synthetic leathers and paper and cardboard articles and for the production of synthetic leathers.

## Revendications

1. Dispersion de polyuréthane ou de polymère hybride à base de polyuréthane avec un caractère hydrophile réduit, que l'on peut obtenir en mettant à réagir
a) 50 à 100 parties en poids d'un copolymère séquencé modifié hydrophobe (A)(i) avec deux ou plus de deux groupes hydroxyle et une masse moléculaire de 500 à 6 000 Dalton, comprenant 10 à 90 % en poids d'un polymère conférant un caractère hydrophobe et 90 à 10 % en poids d'un poly(oxyde de propylène),
et/ou
50 à 100 parties en poids d'un copolymère séquencé hydrophobe (A)(ii) avec deux ou plus de deux groupes hydroxyle et une masse moléculaire de 500 à 6 000 Dalton, comprenant deux ou plus de deux oxydes d'alkylène hydrophobes,
et/ou
50 à 100 parties en poids d'un copolymère statistique modifié hydrophobe (A)(iii) avec deux ou plus de deux groupes hydroxyle et une masse moléculaire de 500 à 6 000 Dalton, comprenant 10 à 90 % en poids d'un oxyde d'alkylène hydrophobe en combinaison avec des molécules d'amorceur appropriées et 90 à 10 % en poids d'oxyde de propylène,
les composants (A)(i), (A)(ii) et (A)(iii) ne contenant pas d'oxyde d'éthylène polymère,
b) 14 à 140 parties poids d'un composant polyol (B), contenant
b₁) 2 à 20 parties en poids d'un composant polyol (B)(i) de faible masse moléculaire et anionique avec deux ou plus de deux groupes hydroxyle et un ou plusieurs groupes acide carboxylique et/ou acide sulfonique inertes vis à vis des polyisocyanates et une masse moléculaire de 100 à 1 000 Dalton,
b₂) éventuellement 2 à 20 parties en poids d'un composant polyol (B)(ii) de faible masse moléculaire avec deux ou plus de deux groupes hydroxyle et une masse moléculaire de 50 à 499 Dalton,
b₃) éventuellement 10 à 100 parties en poids d'un autre polyol polymère (B)(iii) avec deux ou plus de deux groupes hydroxyle et une masse moléculaire de 500 à 6 000 Dalton,
c) 25 à 250 parties en poids d'un composant polyisocyanate (C), comprenant au moins un polyisocyanate, un dérivé de polyisocyanate ou un homologue de polyisocyanate avec deux ou plus de deux groupes isocyanate aliphatiques et/ou aromatiques,
d) 2 à 20 parties en poids d'un composant de neutralisation (D),
e) 3 à 30 parties en poids d'un composant d'allongement de chaîne (E) et
f) 100 à 5 000 parties en poids d'eau
pour obtenir une dispersion de polyuréthane sans solvant ou pauvre en solvant, et en laissant ensuite éventuellement continuer à réagir avec
g) 117,5 à 3 200 parties en poids d'un composant monomère (F) comprenant au moins un monomère avec une ou plusieurs doubles liaisons polymérisables par voie radicalaire et
h) 0,5 à 50 parties en poids d'un composant amorceur (G), comprenant au moins un amorceur radicalaire lipophile avec un ou plusieurs groupes peroxo ou azoïques labiles thermiquement
pour obtenir une dispersion hybride de polymère polyuréthane sans solvant ou pauvre en solvant.

2. Dispersion de polyuréthane ou de polymère hybride à base de polyuréthane selon la revendication 1, **caractérisée en ce qu'**il s'agit pour le composant (A)(i) de copolymères séquencés stable vis à vis d'une saponification avec une structure ABA, BAB ou (AB)ₙ, dans laquelle A représente un segment polymère à caractère hydrophobe et B un segment polymère à base de poly(oxyde de propylène).

3. Dispersion de polyuréthane ou de polymère hybride à base de polyuréthane selon l'une des revendications 1 et 2, **caractérisée en ce qu'**il s'agit pour le composant (A)(ii) de copolymères séquencés stable vis à vis d'une saponification avec une structure A₁A₂A₃ ou (A₁A₂)ₙ, dans laquelle A₁, A₂ et A₃ représentent chacun un segment polymère à caractère hydrophobe.

4. Dispersion de polyuréthane ou de polymère hybride à base de polyuréthane selon la revendication 2 ou 3, **caractérisée en ce que** les segments polymères A, A₁, A₂ et A₃ sont constitués de poly(oxyde de butylène), poly(oxyde de dodécyle), poly(oxyde d'isoamyle), polyoxétane, polyoxétane substitué, poly(oxyde d'α-pinène), poly(oxyde de styrène), poly(oxyde de tétraméthylène), d'autres poly(oxyalkylènes) aliphatiques ou aromatiques avec 4 à 30 atomes de carbone par oxyde d'alkylène, α,ω-polyméthacrylate-diols, α,ω-dihydroxyalkyl-polydiméthyl siloxanes, macromonomères, polymères téléchéliques ou des mélanges de ceux-ci.

5. Dispersion de polyuréthane ou de polymère hybride à base de polyuréthane selon l'une des revendications 1 à 4, **caractérisée en ce que** l'on utilise comme copolymère séquencé modifié hydrophobe (A)(ii) le poly(oxyde de propylène)-*bloc*-poly(oxyde de butylène)-*bloc*-poly(oxyde de propylène) et/ou le poly(oxyde de propylène)-*bloc*-poly(oxyde de styrène)-*bloc*-poly(oxyde de propylène) et/ou le poly(oxyde de propylène)-*bloc*-poly(oxyde de tétraméthylène)-*bloc*-poly(oxyde de propylène) et/ou le poly(oxyde de butylène)-*bloc*-poly(oxyde de propylène)-*bloc-*poly(oxyde de butylène) et/ou le poly(oxyde de styrène)-*bloc*-poly(oxyde de propylène)-*bloc*-poly(oxyde de styrène) et comme copolymère séquencé hydrophobe (A)(ii) le poly(oxyde de butylène)-*bloc*-poly(oxyde de tétraméthylène)-*bloc*-poly(oxyde de butylène), composé de 10 à 90 % en poids de poly(oxyde de butylène) et/ou de poly(oxyde de styrène) et/ou de poly(oxyde de tétraméthylène) et de 90 à 10 % en poids de poly(oxyde de propylène), avec une masse moléculaire de 1 000 à 3 000 Dalton.

6. Dispersion de polyuréthane ou de polymère hybride à base de polyuréthane selon l'une des revendications 1 à 5, **caractérisée en ce qu'**il s'agit pour le composant (A)(iii) de copolymères statistiques stables vis à vis d'une saponification constitués d'au moins un oxyde d'alkylène et d'oxyde de propylène.

7. Dispersion de polyuréthane ou de polymère hybride à base de polyuréthane selon la revendication 6, **caractérisée en ce que** l'oxyde d'alkylène hydrophobe est choisi parmi l'oxyde de butylène, l'oxyde de dodécyle, l'oxyde d'isoamyle, l'oxétane, l'oxétane substitué, l'oxyde d'α-pinène, l'oxyde de styrène, d'autres poly(oxyalkylènes) aliphatiques ou aromatiques avec 4 à 30 atomes de carbone par oxyde d'alkylène ou des mélanges de ceux-ci.

8. Dispersion de polyuréthane ou de polymère hybride à base de polyuréthane selon l'une des revendications 1 à 7, **caractérisée en ce que** l'on utilise comme copolymère statistique modifié hydrophobe (A)(iii) le poly-(oxyde de butylène)-co-poly(oxyde de propylène) et/ou le poly(oxyde de dodécyle)-co-poly(oxyde de propylène) et/ou le poly(oxyde d'isoamyle)-co-poly(oxyde de propylène) et/ou le poly(oxyde d'α-pinène)-co-poly(oxyde de propylène) et/ou le poly-(oxyde de styrène)-co-poly(oxyde de propylène), constitué de 10 bis 90 % en poids d'oxyde de butylène et/ou d'oxyde de dodécyle et/ou d'oxyde d'isoamyle et/ou d'oxyde d'α-pinène et/ou d'oxyde de styrène et 90 à 10 % en poids d'oxyde de propylène, avec une masse moléculaire de 1 000 à 3 000 Dalton.

9. Dispersion de polyuréthane ou de polymère hybride à base de polyuréthane selon l'une des revendications 1 à 8, **caractérisée en ce que** les composants (A)(i), (A)(ii) et (A)(iii) présentent des segments polymères à base de poly(oxyde d'alkylène), qui contiennent du bisphénol A et/ou d'autres molécules d'amorceur hydrophobes.

10. Dispersion de polyuréthane ou de polymère hybride à base de polyuréthane selon l'une des revendications 1 à 9, **caractérisée en ce qu'**il s'agit pour le composant (B)(i) d'un acide bishydroxyalcanecarboxylique.

11. Dispersion de polyuréthane ou de polymère hybride à base de polyuréthane selon la revendication 10, **caractérisée en ce que** l'acide bishydroxyalcanecarboxylique est l'acide diméthylol-propionique.

12. Dispersion de polyuréthane ou de polymère hybride à base de polyuréthane selon l'une des revendications 1 à 11, **caractérisée en ce qu'**il s'agit pour le composant (B)(iii) de polyols polymères comme les polyalkylèneglycols, les polyesters aliphatiques ou aromatiques, les polycaprolactones, les polycarbonates, les α,ω-polyméthacrylatediols, les α,ω-dihydroxyalkyldiméthylsiloxanes, les macromonomères, les polymères téléchéliques, les résines époxyde à fonctionnalité hydroxy ou leurs mélanges.

13. Dispersion de polyuréthane ou de polymère hybride à base de polyuréthane selon l'une des revendications 1 à 12, **caractérisée en ce que** l'on ajuste le rapport équivalent NCO/OH des composants (A), (B) et (C) à une valeur de 1,25 à 2,5, de préférence de 1,4 à 2,0.

14. Dispersion de polyuréthane ou de polymère hybride à base de polyuréthane selon l'une des revendications 1 à 13, **caractérisée en ce que** le composant de neutralisation (D) est présent en une quantité telle que le degré de neutralisation par rapport aux groupes acide carboxylique et/ou acide sulfonique libres du prépolymère de polyuréthane se situe entre 70 et 100 % d'équivalents, de préférence entre 90 et 100 % d'équivalents.

15. Dispersion de polyuréthane ou de polymère hybride à base de polyuréthane selon l'une des revendications 1 à 14, **caractérisée en ce que** le composant d'allongement de chaîne (E) est présent en une quantité telle que le degré d'allongement des chaînes par rapport aux groupes isocyanate libres du prépolymère de polyuréthane se situe entre 50 et 100 % d'équivalents, de préférence entre 70 et 80 % d'équivalents.

16. Dispersion de polyuréthane ou de polymère hybride à base de polyuréthane selon l'une des revendications 1 à 15, **caractérisée en ce qu'**il s'agit pour le composant (F) de l'acide acrylique et de ses dérivés et/ou de l'acide méthacrylique et de ses dérivées et/ou du styrène et de ses dérivés.

17. Dispersion de polyuréthane ou de polymère hybride à base de polyuréthane selon l'une des revendications 1 à 16, **caractérisée en ce que** le composant (G) est un amorceur radicalaire, qui présente à une température de décomposition dans la gamme de 40 à 120 °C un temps de demi-vie de 1 heure.

18. Dispersion de polyuréthane ou de polymère hybride à base de polyuréthane selon la revendication 17, **caractérisée en ce que** le composant (G) est le 2,2'-azobisisobutyronitrile.

19. Dispersion de polyuréthane ou de polymère hybride à base de polyuréthane selon l'une des revendications 1 à 18, **caractérisée en ce que** l'on ajuste le rapport molaire amorceur/monomère des composants (F) et (G) dans une gamme de 0,001 à 0,05.

20. Dispersion de polyuréthane ou de polymère hybride à base de polyuréthane selon l'une des revendications 1 à 19, **caractérisée en ce que,** dans le polymère de polyuréthane constitué des composants (A) à (E), on ajuste la teneur en groupes carboxylate et/ou sulfonate à une valeur comprise entre 10 et 500 méq•(100 g)⁻¹, de préférence entre 15 et 45 méq•(100 g)⁻¹, et l'indice d'acide entre 5 et 30 méq KOH/g, de préférence entre 10 et 25 méq KOH·g⁻¹.

21. Dispersion de polyuréthane ou de polymère hybride à base de polyuréthane selon l'une des revendications 1 à 20, **caractérisée en ce que**, dans le polymère hybride de polyuréthane constitué des composants (A) à (G), on ajuste la teneur en groupes carboxylate et/ou sulfonate à une valeur comprise entre 5 et 25 méq•(100 g)⁻¹, de préférence entre 10 et 20 méq•(100 g)⁻¹, et l'indice d'acide à une valeur comprise entre 2,5 et 15 méq KOH·g⁻¹, de préférence entre 5 et 12,5 méq KOH·g⁻¹.

22. Dispersion de polyuréthane ou de polymère hybride à base de polyuréthane selon l'une des revendications 1 à 21, **caractérisée en ce que** l'on ajuste la teneur en matières solides de polymère de polyuréthane constitué des composants (A) à (E) à une valeur comprise entre 30 et 70 % en poids, de préférence entre 40 et 60 % en poids, par rapport à la quantité totale de la dispersion de polyuréthane.

23. Dispersion de polyuréthane ou de polymère hybride à base de polyuréthane selon l'une des revendications 1 à 22, **caractérisée en ce que** l'on ajuste la teneur en matières solides de polymère hybride de polyuréthane constitué des composants (A) à (G) à une valeur comprise entre 30 et 70 % en poids, de préférence entre 40 et 60 % en poids, par rapport à la quantité totale de la dispersion de polymère hybride de polyuréthane..

24. Dispersion de polyuréthane ou de polymère hybride à base de polyuréthane selon l'une des revendications 1 à 23, **caractérisée en ce que** l'on ajuste le rapport de la teneur en matières solides de résine de polyuréthane constituée des composants (A) à (E) à la teneur en matières solides de résine polymère constituée des composants (F) et (G) à une valeur comprise entre 20 à 80 et 80 à 20 % en poids, de préférence entre 40 à 60 et 60 à 40 % en poids.

25. Dispersion de polyuréthane ou de polymère hybride à base de polyuréthane selon l'une des revendications 1 à 24, **caractérisée en ce que** les dispersions de polyuréthane ou les dispersions de polymère hybride de polyuréthane contiennent moins de 10 % en poids de solvants organiques.

26. Dispersion de polyuréthane ou de polymère hybride à base de polyuréthane selon l'une des revendications 1 à 25, **caractérisée en ce que** la taille moyenne des particules des micelles est de 50 à 500 nm, de préférence de 100 à 400 nm.

27. Dispersion de polyuréthane ou de polymère hybride à base de polyuréthane selon l'une des revendications 1 à 26, **caractérisée en ce que** la masse molaire moyenne (moyenne en nombre) est de 50 000 à 500 000 Dalton.

28. Dispersion de polyuréthane ou de polymère hybride à base de polyuréthane selon l'une des revendications 1 à 27, **caractérisée en ce que** les liants purs constitués des composants (A) à (E) ou (A) à (G) présentent pour une quantité d'absorption de 0,8 kg.m⁻² après 7 jours de séchage à 23 °C et 50 % d'humidité relative et 7 jours de stockage dans l'eau à 23 °C une absorption d'eau de 0,25 à 25 % en poids d'eau distillée.

29. Procédé de préparation d'une dispersion de polyuréthane ou de polymère hybride à base de polyuréthane avec un caractère hydrophile réduit selon l'une des revendications 1 à 28, **caractérisé en ce que** l'on prépare une dispersion de polyuréthane sans solvant ou pauvre en solvant, en
a₁) mettant à réagir les composants (A), (B)(ii), (B)(iii) et (C), éventuellement en présence d'un catalyseur, pour obtenir un pré-adduit de polyuréthane et/ou un prémix des composants (A) et (B),
a₂) mettant à réagir le pré-adduit de l'étape a₁) avec le composant (B)(i) et/ou le prémix de l'étape a₁) avec le composant (C), éventuellement par étapes, pour obtenir un prépolymère de polyuréthane,
a₃) neutralisant le pré-polymère de polyuréthane de l'étape a₂) ensuite avant et/ou pendant la dispersion dans l'eau avec le composant (D),
a₄) effectuant ensuite un allongement de chaîne du pré-polymère de polyuréthane neutralisé et dispersé de l'étape a₃) avec le composant (E),
et **en ce que** l'on prépare éventuellement ensuite une dispersion de polymère hybride de polyuréthane sans solvant ou pauvre en solvant, en
b₁) diluant la dispersion de polyuréthane de l'étape a₄) éventuellement avec de l'eau et en ajoutant ensuite un mélange préparé séparément, des composants (F) et (G) et enfin
b₂) en effectuant une polymérisation radicalaire du composant (F) par décomposition thermique du composant (G).

30. Procédé selon la revendication 29, **caractérisé en ce que** l'on effectue les étapes de réaction a₁) et a₂) à une température de 60 à 120 °C, de préférence de 80 à 100 °C.

31. Procédé selon la revendication 29 ou 30, **caractérisé en ce que** l'on effectue l'étape de réaction a₃) à une température de 40 à 60 °C.

32. Procédé selon l'une des revendications 29 à 31, **caractérisé en ce que** l'on effectue l'étape de réaction a₄) à une température entre 30 à 50 °C.

33. Procédé selon l'une des revendications 29 à 32, **caractérisé en ce que** l'on effectue l'étape de réaction b₁) à une température de 15 à 35 °C, de préférence de 20 à 30 °C.

34. Procédé selon l'une des revendications 29 à 33, **caractérisé en ce que** l'on effectue l'étape de réaction b₂) à une température différente de ± 10 °C de la température, à laquelle le composant (G) présente une demi-vie de 1 heure.

35. Procédé selon l'une des revendications 29 à 34, **caractérisé en ce que** l'on effectue l'étape de réaction b₂) à une température de 80 ± 10 °C en utilisant le 2,2'-azobisisobutyronitrile comme composant (G).

36. Procédé selon l'une des revendications 29 à 35, **caractérisé en ce que**, à la suite de l'étape de réaction a₄), les groupes NCO libres éventuellement encore présents sont soumis à un allongement de chaîne complet avec de l'eau

37. Procédé selon l'une des revendications 1 à 36, **caractérisé en ce que** l'on effectue la polymérisation radicalaire à l'étape de réaction b₂) sans autres émulsifiants.

38. Utilisation de la dispersion de polyuréthane ou de polymère hybride à base de polyuréthane selon l'une des revendications 1 à 28, **caractérisée en ce qu'**on l'utilise sous une forme à un ou deux composants.

39. Utilisation selon la revendication 38, **caractérisée en ce que**, dans l'application à deux composants, on utilise la dispersion de polyuréthane ou de polymère hybride à base de polyuréthane, formulée ou non formulée, comme composant de liant et les polyisocyanates émulsionnables à l'eau comme composant de durcisseur.

40. Utilisation de la dispersion de polyuréthane ou de polymère hybride à base de polyuréthane selon l'une des revendications 1 à 28 comme liant dans des formulations pour des revêtements de terrains de sport et des revêtements de terrains de tennis sous la forme de
(a) liants pour couches élastiques, comprenant des granulés de caoutchouc ou des fibres et éventuellement des additifs,
(b) promoteurs d'adhérence ou couches de fond sur les substrats de revêtements de sols pour le sport,
(c) revêtements par pulvérisation, éventuellement avec des charges de structure, pour le dépôt sur des substrats élastiques ou rigides,
(d) revêtements nivelants pour le dépôt sur des substrats élastiques ou rigides,
(e) mastic bouche-pores pour fermer les pores de substrats élastiques ou rigides,
(f) colles pour le collage de couches élastiques préfabriquées,
(g) colmatages, éventuellement avec des pigments, et
(h) peintures de réglage.

41. Utilisation de la dispersion de polyuréthane ou de polymère hybride à base de polyuréthane selon l'une des revendications 1 à 28 comme liant dans des formulations pour des systèmes de revêtement pour recouvrir des fissures sous la forme de
a) couches de fond, d'enduit ou de protection, et couches de pulvérisation ou scellements sur des surfaces de bâtiment de préférence primées,
b) revêtements ou de peintures de toits éventuellement ignifuges, et
c) joints d'étanchéité de bâtiments éventuellement ignifuges dans les mines à ciel ouvert ou souterraines.

42. Utilisation de la dispersion de polyuréthane ou de polymère hybride à base de polyuréthane selon l'une des revendications 1 à 28 comme liant pour des revêtements, des substances d'étanchéité, des colorants d'impression, des peintures et des vernis, des couches de fond, des colles, des membranes pour les surfaces de matériaux de construction minéraux, comme par exemple le béton, le gypse, la céramique, l'argile, le ciment, et pour les surfaces de verre, de caoutchouc, de bois, de matériaux à base de bois, de matières plastiques, de métal, de papier, de matériaux composites.

43. Utilisation de la dispersion de polyuréthane ou de polymère hybride à base de polyuréthane selon l'une des revendications 1 à 28 comme liant pour l'amélioration de liants hydrauliques.

44. Utilisation de la dispersion de polyuréthane ou de polymère hybride à base de polyuréthane selon l'une des revendications 1 à 28 comme liant pour le revêtement de cuirs naturels et synthétiques et de papiers et de cartonnages et pour la production de cuirs synthétiques.
